(19) Europäisches Patentamt
European Patent Office
Office européen des brevets

(11) **EP 4 728 841 A1**

(12) **EUROPÄISCHE PATENTANMELDUNG**

(43) Veröffentlichungstag:
**22.04.2026 Patentblatt 2026/17**

(21) Anmeldenummer: **25203740.3**

(22) Anmeldetag: **22.09.2025**

(51) Internationale Patentklassifikation (IPC):
***A01B 69/04*** *(2006.01)*

(52) Gemeinsame Patentklassifikation (CPC):
**A01B 69/008; A01D 87/122; A01D 90/16;
G06Q 10/047**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **17.10.2024 DE 102024130191**

(71) Anmelder: **Maschinenfabrik Bernard Krone
GmbH & Co. KG
48480 Spelle (DE)**

(72) Erfinder:
• **Grever, Alexander
49074 Osnabrück (DE)**
• **Kreyenhagen, Michael
49163 Bohmte (DE)**
• **Amshove, Martin
48619 Heek (DE)**
• **Menke, Stefan
46354 Südlohn (DE)**

(54) **VERFAHREN ZUR AUFNAHME VON ERNTEGUTBALLEN**

(57)     Die Erfindung betrifft ein Verfahren zur Aufnahme von Erntegutballen (30), die in einem Bearbeitungsbereich (5) angeordnet sind, durch eine Sammeleinheit (20), mit den Schritten:
- Bereitstellen (S110) von Anordnungsinformationen, die jeweils einer erwarteten Soll-Anordnung ($S_i$) jedes einer Mehrzahl von Erntegutballen (30) entsprechen,
- rechnergestütztes Ermitteln (S120) einer optimalen Fahrroute ($F_{opt}$) zur Aufnahme der Mehrzahl von Erntegutballen (30) anhand der Anordnungsinformationen, entsprechend einem definierten Optimierungskriterium zur Fahrroutenoptimierung, wobei die optimale Fahrroute ($F_{opt}$) einen Soll-Anfahrweg ($W_{S1}$-$W_{S6}$) für jeden Erntegutballen (30) enthält, entlang dessen der Erntegutballen (30) anzufahren ist, und
- Anfahren (S130) der Erntegutballen (30) durch die Sammeleinheit (20), wobei bei Annäherung an den jeweiligen Erntegutballen (30) eine Real-Anordnung ($R_i$) desselben ermittelt wird (S140) und der Erntegutballen (30) entsprechend der Real-Anordnung ($R_i$) entlang eines Real-Anfahrwegs ($W_{Ri}$) angefahren wird.

Um die Routenplanung für eine Aufnahme von Erntegutballen zu verbessern, ist erfindungsgemäß vorgesehen, dass bei einer Abweichung des Real-Anfahrwegs ($W_{Ri}$) eines Erntegutballens vom Soll-Anfahrweg ($W_{S1}$-$W_{S6}$) die optimale Fahrroute ($F_{opt}$) unter Berücksichtigung des abweichenden Real-Anfahrwegs ($W_{Ri}$) wenigstens teilweise erneut rechnergestützt ermittelt wird (S210).

Fig.1

**Beschreibung**

Die vorliegende Erfindung betrifft ein Verfahren zur Aufnahme von Erntegutballen, nach dem Oberbegriff von Anspruch 1, sowie ein Computersystem nach Anspruch 16.

Verschiedene Arten von landwirtschaftlichem Erntegut, insbesondere Halmgut wie zum Beispiel Gras, aber auch Luzerne oder Mais, werden oftmals nach der Ernte sowie gegebenenfalls einer Trocknung zu Erntegutballen verarbeitet, zum Beispiel Quaderballen oder Rundballen. Zwar sind auch stationäre Ballenpressen bekannt, in vielen Fällen werden jedoch die Erntegutballen auf dem Flurstück, auf dem auch das Erntegut geschnitten wurde, von einer mobilen Ballenpresse hergestellt. Die Ballenpresse wird entweder von einem Schlepper gezogen oder ist als Selbstfahrer mit eigenem Antrieb ausgebildet. Dabei wird nach und nach das Flurstück in geeigneter Weise abgefahren, zum Beispiel entlang der Schwade, die zuvor abgelegt wurden. Wenn die Ballenpresse genug Erntegut für einen Ballen gesammelt und diesen fertig verpresst hat, kann der Erntegutballen zum Beispiel mit einem Garn oder Netz gebunden werden, bevor er ausgeworfen wird. Optional kann der Erntegutballen noch mit einer Folie umwickelt werden. Die hierfür vorgesehene Wickelvorrichtung kann zum Beispiel an die Ballenpresse angehängt sein oder auch von deren Rahmen mit getragen werden. Schließlich wird der Erntegutballen auf dem Flurstück abgelegt.

In einem späteren Arbeitsschritt werden die Erntegutballen aufgesammelt und abtransportiert. Eine Möglichkeit besteht darin, die Erntegutballen mit einem geeigneten Ladefahrzeug, beispielsweise einem Schlepper mit Anbaugerät, nach und nach auf einen Plattformwagen zu laden, der auf dem Flurstück oder in der Nähe abgestellt wurde. Sobald der Plattformwagen voll beladen ist, kann er von einem Schlepper zum vorgesehenen Entladeort befördert werden. Daneben sind auch Sammeleinheiten bekannt, die sowohl das Aufnehmen der Erntegutballen als auch deren Transport durchführen können. Es kann sich bei solchen Sammeleinheiten um Einzelfahrzeuge oder Gespanne handeln. Ein Beispiel hierfür sind sog.

Ballensammelwagen, die sowohl einen Greifer zum Erfassen eines Erntegutballens aufweisen als auch eine ausreichende Ladefläche oder einen Ladebereich für eine Mehrzahl von Erntegutballen. Ein großer Vorteil solcher Sammeleinheiten ist, dass nach der Aufnahme eines Erntegutballens unmittelbar der nächste Erntegutballen angefahren werden kann, ohne dass zunächst ein abgestellter Plattformwagen angefahren werden muss, um den Erntegutballen abzuladen.

Aufgrund der typischerweise hohen Anzahl von Erntegutballen auf einem Flurstück, die einige hundert betragen kann, ist es für die Optimierung des Ladevorgangs entscheidend, in welcher Reihenfolge und auf welchem Weg die Erntegutballen nacheinander angefahren werden. Dabei ist zu beachten, dass die Sammeleinheit den Erntegutballen oftmals nur in einer bestimmten Relativposition und gegebenenfalls auch nur in einer bestimmten Relativorientierung aufnehmen kann. Das heißt der Erntegutballen muss beispielsweise in Fahrtrichtung direkt vor der Sammeleinheit liegen, wobei seine Längsachse parallel zur Fahrtrichtung orientiert sein muss. Die Genauigkeit, mit der die Relativposition und -orientierung einzuhalten sind, variiert dabei selbstverständlich je nach Sammeleinheit. Grundsätzlich existieren im Stand der Technik geeignete Lösungsansätze für eine optimale Routenplanung, der neben einer Zeitersparnis auch andere Optimierungskriterien zugrunde gelegt werden können. In der Praxis kann die Durchführung allerdings dadurch beeinträchtigt sein, dass einzelne Erntegutballen nicht wie vorgesehen angefahren werden oder werden können. Ein möglicher Grund hierfür liegt darin, dass die bei der Routenplanung angenommene Position und Orientierung des Erntegutballens nicht mit der Realität übereinstimmen. Ein anderer Grund könnte darin liegen, dass ein Fahrer aufgrund von Unaufmerksamkeit oder wegen eines Hindernisses von der geplanten Fahrroute abweicht. Dies beeinflusst zum einen den Aufnahmevorgang des jeweils aktuellen Erntegutballens. Zum anderen kann es allerdings auch einen nachteiligen Einfluss auf die weitere Fahrroute haben, da die Sammeleinheit nach dem Aufnehmen des aktuellen Ballens unter Umständen nicht so positioniert ist, wie es bei der Routenplanung vorgesehen war. Dies kann wiederum den Weg zum nächsten Erntegutballen beeinflussen.

Aufgabe der Erfindung ist es, die Routenplanung für eine Aufnahme von Erntegutballen zu verbessern.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zur Aufnahme von Erntegutballen, die in einem Bearbeitungsbereich angeordnet sind, durch eine Sammeleinheit. Das Verfahren weist die folgenden Schritte auf:

- Bereitstellen von Anordnungsinformationen, die jeweils einer erwarteten Soll-Anordnung jedes einer Mehrzahl von Erntegutballen entsprechen,
- rechnergestütztes Ermitteln einer optimalen Fahrroute zur Aufnahme der Mehrzahl von Erntegutballen anhand der Anordnungsinformationen, entsprechend einem definierten Optimierungskriterium zur Fahrrouteoptimierung, wobei die optimale Fahrroute einen Soll-Anfahrweg für jeden Erntegutballen enthält, entlang dessen der Erntegutballen anzufahren ist, und
- Anfahren der Erntegutballen durch die Sammeleinheit, wobei bei Annäherung an den jeweiligen Erntegutballen eine Real-Anordnung desselben ermittelt wird und der Erntegutballen entsprechend der Real-Anordnung entlang eines Real-Anfahrwegs

Bei den Erntegutballen kann es sich um Ballen handeln, die verschiedene Arten von landwirtschaftlichem Erntegut aufweisen können, zum Beispiel Mais, Luzerne oder Halmgut wie Heu, Gras oder Stroh, wobei diese Aufzählung nicht als abschließend oder in anderer Weise einschränkend auszulegen ist. Hinsichtlich der Form der Erntegutballen bestehen ebenfalls keine Einschränkungen, es kann sich insbesondere um Rundballen oder um Quaderballen handeln. Das Erntegut ist innerhalb des Erntegutballens verpresst und die Form des Erntegutballens ist mit einem geeigneten Bindemittel, zum Beispiel einem Netz, Garn, oder thermoplastischen Band, gesichert. Außerdem kann der Erntegutballen eine Umwicklung aus Folie aufweisen, durch welche ein Feuchtigkeitsaustausch des Ernteguts mit der Umgebung verhindert wird.

Bei dem Verfahren werden eine Mehrzahl von Erntegutballen aufgenommen. Man kann statt von einem Aufnehmen auch von einem Aufsammeln oder Einsammeln sprechen. Das Aufnehmen erfolgt durch eine Sammeleinheit. Diese kann als Sammelmaschine oder Sammelfahrzeug mit eigenem Fahrantrieb ausgebildet sein. Es kann sich aber auch um ein Gespann handeln, bei welchem insbesondere ein Schlepper wenigstens ein Fahrzeug ohne eigenen Fahrantrieb zieht. Die Erntegutballen sind vor der Aufnahme in einem Bearbeitungsbereich angeordnet. Dies bedeutet normalerweise, dass jeder Ballen auf dem Boden des Bearbeitungsbereichs aufliegt, wenngleich sich das Verfahren auch auf Fälle anwenden lässt, in denen zum Beispiel Ballen aufeinandergestapelt sind. Bei dem Bearbeitungsbereich kann es sich zum Beispiel um ein Feld, eine Wiese oder dergleichen handeln. Es kann sich um ein Flurstück oder einen Teil eines Flurstücks handeln. Allgemein ist dies der Bereich, in dem das erfindungsgemäße Verfahren durchgeführt wird.

Bei dem Verfahren werden wenigstens die nachfolgend genannten Schritte durchgeführt. Sie können insbesondere in der genannten Reihenfolge durchgeführt werden. Es ist allerdings nicht ausgeschlossen, dass Verfahrensschritte wenigstens teilweise gleichzeitig und/oder in anderer Reihenfolge durchgeführt werden.

In einem Schritt des Verfahrens erfolgt ein Bereitstellen von Anordnungsinformationen, die jeweils einer erwarteten Soll-Anordnung jedes einer Mehrzahl von Erntegutballen entsprechen. Das Bereitstellen kann hierbei eine erstmalige Bestimmung der Anordnungsinformationen beinhalten. Eine derartige Bestimmung kann wenigstens teilweise auf menschlicher Beobachtung beruhen, bevorzugt ist allerdings eine sensorische Bestimmung, also basierend auf wenigstens einer sensorischen Messung. Das Bereitstellen kann allerdings auch beinhalten, dass ein Zugriff auf eine Datenquelle ermöglicht wird, in welcher die Anordnungsinformationen gespeichert sind. Schließlich kann das Bereitstellen ein Berechnen von Anordnungsinformationen beinhalten. In diesem Fall können beispielsweise aus einer Datenquelle ausgelesene Daten und/oder Sensordaten, die auf einer sensorischen Messung beruhen, der Berechnung zugrunde gelegt werden. Die Anordnungsinformationen beziehen sich auf eine Mehrzahl von Erntegutballen, bevorzugt auf sämtliche Erntegutballen in dem Bearbeitungsbereich. Für jeden dieser Erntegutballen entsprechen die Anordnungsinformationen einer Soll-Anordnung desselben. Das heißt, die Anordnungsinformationen beschreiben jeweils eine Soll-Anordnung jedes der Erntegutballen. Wie der Begriff "Soll" andeutet, handelt es sich um eine Anordnung, in welcher der Erntegutballen sein soll oder sollte. Das heißt, man erwartet, den Erntegutballen in der Soll-Anordnung vorzufinden, insbesondere zum Zeitpunkt der Aufnahme des Erntegutballens. Die Soll-Anordnung ist jeweils in Relation zu einem festen Bezugssystem gegeben, insbesondere einem globalen Bezugssystem, alternativ aber auch einem lokalen Bezugssystem wie zum Beispiel dem Bearbeitungsbereich. Allgemein lässt sich die Anordnung des Erntegutballens durch sechs Koordinaten, nämlich drei translatorische und drei rotatorische, beschreiben. Allerdings muss die Soll-Anordnung insofern keiner vollständigen Beschreibung entsprechen, das heißt, es müssen nicht für jeden Erntegutballen sechs Koordinaten bereitgestellt werden. Wie nachfolgend noch ausgeführt wird, können die Anordnungsinformationen auch Auskunft über eine Toleranz, Ungenauigkeit oder Unsicherheit hinsichtlich der Soll-Anordnung geben. In einem solchen Fall entspricht die Soll-Anordnung nicht genau einem (zum Beispiel sechsdimensionalen) Koordinaten-Tupel, sondern einer zum Beispiel Verteilung von Koordinaten.

Das Bereitstellen der Anordnungsinformationen kann wenigstens teilweise durch die Sammeleinheit erfolgen, insbesondere kann es aber auch wenigstens teilweise durch ein bezüglich der Sammeleinheit externes Computersystem erfolgen. Ein derartiges Computersystem könnte in einer mobilen Einheit wie einem Laptop oder Smartphone oder einem Fahrzeug angeordnet sein. Es könnte aber auch stationär in einem Gebäude angeordnet sein. Das Bereitstellen kann wenigstens teilweise im Bearbeitungsbereich oder in dessen Nähe erfolgen. Wenigstens teilweise kann es aber auch an einem Ort erfolgen, der weit vom Bearbeitungsbereich entfernt ist. Dies kann sich sowohl auf einen Zugriff auf eine oben genannte Datenquelle beziehen als auch auf eine Berechnung von Anordnungsinformationen.

In einem weiteren Schritt erfolgt ein rechnergestütztes Ermitteln einer optimalen Fahrroute zur Aufnahme der Mehrzahl von Erntegutballen anhand der Anordnungsinformationen, entsprechend einem definierten Optimierungskriterium zur Fahrrouteoptimierung, wobei die optimale Fahrroute einen Soll-Anfahrweg für jeden Erntegutballen enthält, entlang dessen der Erntegutballen anzufahren ist. Es wird also eine Fahrroute gesucht, entlang welcher die Sammeleinheit die Ernteangefahren wird.

gutballen anfahren und aufnehmen kann. Dies ist im Allgemeinen in unterschiedlicher Weise möglich, das heißt es sind unterschiedliche Fahrrouten denkbar. In diesem Verfahrensschritte erfolgt allerdings eine Fahrroutenoptimierung, das heißt es wird die optimale Fahrroute gesucht. Die Fahrroute ist optimal im Hinblick auf ein Optimierungskriterium, das in unterschiedlicher Weise definiert sein kann. Die Ermittlung erfolgt rechnergestützt, man kann auch sagen maschinell oder computergestützt. Soweit hier und im Folgenden der Begriff "rechnergestützt" verwendet wird, schließt dies insbesondere die Möglichkeit ein, dass die entsprechenden Vorgänge ganz oder teilweise durch Software durchgeführt werden, die auf einer geeigneten Hardware implementiert ist. Dieser Schritt sowie weitere rechnergestützte Schritte des Verfahrens können durch ein Computersystem, zum Beispiel ein Farm-Management-Informationssystem (FMIS), durchgeführt werden. Insbesondere kann die Ermittlung automatisch erfolgen, nachdem die Anordnungsinformationen bereitgestellt wurden, ohne dass ein Benutzer die Ermittlung auslösen oder andere Eingaben vornehmen muss.

Es versteht sich, dass in diesem Verfahrensschritt unter Umständen nicht alle theoretisch vorstellbaren Fahrrouten untersucht werden können, da dies zu viel Rechenleistung, Speicherplatz und/oder Rechenzeit in Anspruch nehmen würde. Das heißt die optimale Fahrroute ist optimal, also die Beste, innerhalb einer begrenzten Menge an untersuchten Fahrrouten. Beim Ermitteln der optimalen Fahrroute werden die Anordnungsinformationen zugrunde gelegt. Die optimale Fahrroute ist so ausgelegt, dass die Sammeleinheit einen Erntegutballen jeweils entsprechend seiner Soll-Anordnung aufnehmen kann. Die optimale Fahrroute enthält einen Soll-Anfahrweg für jeden Erntegutballen. Der Soll-Anfahrweg ist ein Teil der optimalen Fahrroute, der zum jeweiligen Erntegutballen hinführt. Entsprechend ist er so ausgelegt, dass er unter Zugrundelegung der Soll-Anordnung ein Aufnehmen des Erntegutballens ermöglicht. In den meisten Ausführungsformen unterscheiden sich daher die Soll-Anfahrwege unterschiedlicher Erntegutballen, da sich auch deren Soll-Anordnungen unterscheiden. Der Soll-Anfahrweg kann in unterschiedlicher Art definiert sein. Es kann sich zum Beispiel um den Teil der optimalen Fahrroute handeln, der zu genau einem Erntegutballen führt, also entweder vom Beginn der Fahrroute zum ersten Erntegutballen oder von einem Erntegutballen zum jeweils nächsten. In diesem Fall ergäbe sich die optimale Fahrroute aus einer Aneinanderreihung von Soll-Anfahrwegen. Es wäre aber auch zum Beispiel möglich, einen kleineren oder größeren Teil der Fahrroute, jeweils bis zu dem Erntegutballen, als "Soll-Anfahrweg" zu definieren.

In einem weiteren Schritt des Verfahrens erfolgt ein Anfahren der Erntegutballen durch die Sammeleinheit, wobei bei Annäherung an den jeweiligen Erntegutballen eine Real-Anordnung desselben ermittelt wird und der Erntegutballen entsprechend der Real-Anordnung entlang eines Real-Anfahrwegs angefahren wird. Das heißt in diesem Schritt ist das eigentliche Aufsammeln der Erntegutballen vorgesehen, wozu die Sammeleinheit die Erntegutballen anfährt. Das Anfahren kann insbesondere wenigstens teilweise entsprechend der optimalen Fahrroute erfolgen. Die Sammeleinheit kann sich also wenigstens teilweise an der optimalen Fahrroute orientieren. Wenn sich die Sammeleinheit einem Erntegutballen nähert, wird eine tatsächliche Anordnung des Erntegutballens ermittelt, die hier und im Folgenden als Real-Anordnung bezeichnet wird. Die "Annäherung" an den Erntegutballen kann insbesondere beim Anfahren desselben erfolgen, also wenn dieser Erntegutballen als nächster aufgenommen werden soll. Allgemeiner kann dies allerdings jede Annäherung sein, die es ermöglicht, die Real-Anordnung zu ermitteln. Die Real-Anordnung kann mit der Soll-Anordnung übereinstimmen oder von dieser abweichen. Der Erntegutballen wird entsprechend der Real-Anordnung entlang eines Real-Anfahrwegs angefahren. Der Real-Anfahrweg muss sich in jedem Fall an der Real-Anordnung orientieren, da nur so ein erfolgreiches Aufnehmen des Erntegutballens möglich ist. Wenngleich die Anfahrwege mit unterschiedlichen Begriffen bezeichnet werden, kann der Real-Anfahrweg mit dem Soll-Anfahrweg übereinstimmen.

Erfindungsgemäß wird bei einer Abweichung des Real-Anfahrwegs eines Erntegutballens vom Soll-Anfahrweg die optimale Fahrroute unter Berücksichtigung des abweichenden Real-Anfahrwegs wenigstens teilweise erneut ermittelt. Das heißt, wenn der Real-Anfahrweg vom Soll-Anfahrweg abweicht, wird die optimale Fahrroute ganz oder teilweise neu ermittelt. Dabei können die Gründe für eine Abweichung vom Soll-Anfahrweg unterschiedlich sein, zum Beispiel kann ein Hindernis den Soll-Anfahrweg versperren, weshalb auf einen abweichenden Real-Anfahrweg ausgewichen wird. Auch könnte im Fall einer manuellen Steuerung der Sammeleinheit ein Fahrfehler vorkommen, zum Beispiel weil der Fahrer zeitweise abgelenkt ist. Insbesondere kann allerdings eine Abweichung der Real-Anordnung von der Soll-Anordnung dazu führen, dass der Soll-Anfahrweg nicht eingehalten werden kann. Die Fahrroute wird wenigstens teilweise neu ermittelt, das heißt wenigstens ein Teile der Fahrroute wird neu geplant. Bevorzugt wird die Fahrroute für wenigstens einen noch aufzunehmenden Erntegutballen, weiter bevorzugt für eine Mehrzahl noch aufzunehmender Erntegutballen, besonders bevorzugt für alle noch aufzunehmenden Erntegutballen neu ermittelt.

Die Neu-Ermittlung oder Neuplanung der optimalen Fahrroute muss nicht zwangsläufig zu einer Änderung der gesamten verbleibenden Fahrroute führen. Zumindest in Teilen kann die neu ermittelte optimale Fahrroute mit der zuvor ermittelten übereinstimmen. Es wäre auch denkbar, dass sich die erneute Ermittlung auf eine bestimmte Anzahl nachfolgender Erntegutballen beschränkt. Ein derartiger Ansatz kann allerdings nachteilig sein, da sich aus einer Neu-Ermittlung der Fahrroute auch eine andere Reihenfolge der Erntegutballen ergeben kann. Somit ist eine a-priori Festlegung, welche Erntegutballen auf der Fahrroute die nächsten sind, allgemein nicht möglich. Durch die Abweichung des Real-Anfahrwegs vom Soll-Anfahrweg kann sich eine geänderte Position und/oder Orientierung der Sammeleinheit nach der Ballenaufnahme verändern. Dies wiederum kann dazu führen, dass eine Rückkehr auf die ursprünglich geplante optimale Fahrroute umständlich wäre. Stattdessen kann nunmehr eine andere Fahrroute optimal sein, weshalb ein erneutes Ermitteln sinnvoll ist. Es kann beispielsweise auch vorkommen, dass durch eine geänderte Anordnung der Sammeleinheit ein anderer Erntegutballen besser zu erreichen ist als der ursprünglich als nächstes vorgesehene. Die optimale Fahrroute wird "unter Berücksichtigung des abweichenden Real-Anfahrwegs" neu ermittelt, was nicht dahingehend auszulegen ist, dass der gesamte Real-Anfahrweg berücksichtigt werden muss. Es kann auch nur ein Teil des Real-Anfahrwegs berücksichtigt werden, insbesondere die Position und Orientierung der Sammeleinheit am Ende des Real-Anfahrwegs. Um möglicherweise unnötige Neu-Ermittlungen der Fahrroute zu vermeiden, ist es möglich, dass die Fahrroute nur dann wenigstens teilweise neu ermittelt wird, wenn die Abweichung als wesentlich eingestuft wird. Das heißt, es kann hinsichtlich der Abweichung des Real-Anfahrwegs vom Soll-Anfahrweg ein Kriterium definiert sein, wann eine Abweichung als wesentlich anzusehen ist. Ist dieses Kriterium nicht erfüllt, gilt die Abweichung als unwesentlich und wird vernachlässigt.

Gemäß einer Ausgestaltung basiert das Optimierungskriterium wenigstens teilweise auf einer Minimierung einer Fahrstrecke. "Wenigstens teilweise" bedeutet in diesem Zusammenhang, dass die Minimierung der Fahrstrecke nicht das einzige Ziel sein muss, sondern dass auch andere Werte minimiert beziehungsweise maximiert werden sollen, so dass beispielsweise ein Kompromiss hergestellt wird, der sich von einer alleinigen Minimierung der Fahrstrecke unterscheiden kann. Insbesondere kann vorgesehen sein, die gesamte auf der Fahrroute zurückgelegte Fahrstrecke zu minimieren. Alternativ oder zusätzlich kann das Optimierungskriterium wenigstens teilweise auf einer Minimierung einer Fahrzeit basieren. Die beiden Kriterien sind nicht gleichbedeutend, da die Sammeleinheit zum Beispiel bei einer Kurvenfahrt langsamer sein kann als bei Geradeausfahrt. Auch könnte es zum Beispiel sein, dass der Bearbeitungsbereich ein Gefälle aufweist, das die Sammeleinheit in einer Richtung schneller fahren kann als in einer anderen Richtung, zum Beispiel in Gegenrichtung. Weiterhin alternativ oder zusätzlich kann das Optimierungskriterium wenigstens teilweise auf einer Minimierung eines Energieverbrauchs basieren. Hierbei wird normalerweise der voraussichtliche Energieverbrauch für die gesamte Fahrroute betrachtet. Dieser hängt von der gesamten Fahrstrecke ab, allerdings evtl. auch von anderen Parametern. So kann der Energieverbrauch auch davon abhängen, ob die Sammeleinheit zum Beispiel eine mehr oder weniger starke Steigung bewältigen muss.

Unter Umständen kann das Optimierungskriterium in einer Minimierung oder Maximierung einer einzelnen Größe beziehungsweise eines einzelnen Optimierungswertes bestehen, zum Beispiel einer Minimierung der gesamten Fahrstrecke. Je nach Beschaffenheit des Bearbeitungsbereichs, den Leistungsdaten der Sammeleinheit und/oder anderer Faktoren kann die Minimierung oder Maximierung eines Optimierungswertes bis zu einem gewissen Grad in Konkurrenz mit einer ebenfalls wünschenswerten Minimierung oder Maximierung eines anderen Optimierungswertes stehen. In diesem Fall stellt die isolierte Optimierung eines einzelnen Optimierungswertes oftmals keine zufriedenstellende Lösung dar. Eine Ausgestaltung sieht daher vor, dass das Optimierungskriterium auf der Optimierung einer gewichteten Kombination von Optimierungswerten basiert. Statt von einer gewichteten Kombination kann man normalerweise auch von einer Linearkombination sprechen, wenngleich es prinzipiell denkbar wäre, dass ein Optimierungswert nichtlinear, also zum Beispiel quadratisch, eingeht. Ein Optimierungswert könnte dabei beispielsweise die Fahrstrecke sein, während ein anderer Optimierungswert die Fahrzeit ist. Das Optimierungskriterium könnte dann in der Minimierung einer Summe liegen, wobei ein Summand proportional zur Fahrzeit und ein anderer Summand proportional zur Fahrstrecke ist. Durch Wahl geeigneter Gewichtungsfaktoren beziehungsweise Normierungsfaktoren kann das relative Gewicht des jeweiligen Optimierungswertes angepasst werden. Die Summe kann auch als "Gesamt-Optimierungswert" $W_{gesamt}$ angesehen werden, welcher wie folgt definiert ist:

$$W_{gesamt} = \sum_k a_k W_k$$

wobei $W_k$ den k-ten Optimierungswert, zum Beispiel die Fahrstrecke, Fahrzeit etc. bezeichnet und $a_k$ der jeweilige Gewichtungsfaktor ist. Alternativ kann das Optimierungskriterium auf einer Pareto-Optimierung mehrerer Optimierungswerte basieren. Das heißt es wird eine Fahrroute gesucht, welche die Optimierungswerte insoweit optimiert, als keine andere Fahrroute einen der Optimierungswerte demgegenüber verbessert, ohne einen anderen zu verschlechtern.

In den meisten Ausgestaltungen des Verfahrens entspricht die Soll-Anordnung wenigstens einer translatorischen Position eines Erntegutballens. Insbesondere kann die Soll-Anordnung eines Erntegutballens wenigstens einer translatorischen Position sowie wenigstens einer rotatorischen Orientierung desselben entsprechen. Die translatorische Position gibt an, wo sich der Erntegutballen befinden soll. Sie kann vorteilhaft zwei oder drei Koordinaten entsprechen, zum Beispiel Länge, Breite und optional Höhe. Es können unterschiedliche Koordinatensysteme zugrunde gelegt werden, zum Beispiel geographische Koordinaten oder GNSS-Koordinaten. Die rotatorische Orientierung gibt an, in welcher Lage und Ausrichtung der Erntegutballen angeordnet sein soll. Sie kann vorteilhaft ein, zwei oder drei Koordinaten entsprechen, die jeweils Winkel ausdrücken. Im Fall von Rundballen sind ein oder zwei Koordinaten ausreichend, da eine Rotation um die Symmetrieachse des Erntegutballens irrelevant ist. Im Fall eines Quaderballens können drei Koordinaten notwendig sein, je nach Form des Erntegutballens sowie je nach Typ der Sammeleinheit sind aber auch hier gegebenenfalls ein oder zwei Koordinaten ausreichend. In einer Ausgestaltung entspricht die Soll-Anordnung genau einer translatorischen Position und einer rotatorischen Orientierung des Erntegutballens. Es sind allerdings auch alternative Ausführungsformen denkbar, die im Folgenden noch besprochen werden.

Es ist im Rahmen der Erfindung möglich, dass ein Fahrer der Sammeleinheit die Real-Anordnung eines Erntegutballens visuell, also mit den Augen, erkennt und dementsprechend die Sammeleinheit manuell entlang des Real-Anfahrwegs steuert. Bevorzugt wird die Real-Anordnung jedoch sensorisch ermittelt. Das heißt sie wird mittels wenigstens einer Sensoreinheit ermittelt. Bevorzugt weist die Sammeleinheit die Sensoreinheit auf. Sie kann fest in die Sammeleinheit integriert sein oder für einen Einsatz bedarfsweise an der Sammeleinheit angeordnet werden. Es können unterschiedliche passive und/oder aktive Sensoreinheiten eingesetzt werden. Als passive Sensoren können insbesondere Kameras eingesetzt werden, die sichtbares Licht und/oder Infrarotlicht empfangen können. Als aktive Sensoren können beispielsweise Ultraschall-, Radar- oder Lidar-Sensoren verwendet werden. Die Sensordaten können bevorzugt maschinell ausgewertet werden, um Zahlenwerte für die Real-Anordnung zu erhalten.

Eine Ausgestaltung sieht vor, dass die Real-Anordnung sowie bevorzugt der Real-Anfahrweg automatisch ermittelt werden. Das heißt die Real-Anordnung wird ermittelt, ohne dass ein Benutzer hieran teilnehmen oder dies auslösen muss. Eine Steuereinheit, die insbesondere Teil der Sammeleinheit sein kann, kann mittels einer oben genannte Sensoreinheit die Umgebung der Sammeleinheit abtasten und zum Beispiel bei Annäherung an einen Erntegutballen dessen Real-Anordnung feststellen. Entsprechen der Real-Anordnung kann der Real-Anfahrweg ermittelt werden. Wenngleich ein Benutzer, zum Beispiel ein Fahrer den Real-Anfahrweg nach Augenmaß ermitteln könnte, ist es bevorzugt, dass dies ebenfalls automatisch geschieht, also ohne Zutun eines Benutzers. Die Steuereinheit kann aus der Real-Anordnung des Erntegutballens und der aktuellen Anordnung der Sammeleinheit einen geeigneten Real-Anfahrweg bestimmen. Alternativ könnte auch das oben genannte Computersystem den Real-Anfahrweg bestimmen, nachdem es von der Sammeleinheit die Real-Anordnung und die aktuelle Anordnung empfangen hat. Es ist bei dieser Ausführungsform allerdings möglich, dass ein Fahrer die Sammeleinheit manuell entlang des automatisch bestimmten Real-Anfahrwegs steuert.

Die oben beschriebene Neu-Ermittlung der optimalen Fahrroute hängt von einer Abweichung des Real-Anfahrwegs ab. Das heißt sie setzt voraus, dass der Real-Anfahrweg zumindest teilweise bereits bekannt ist. Ergänzend hierzu kann vorgesehen sein, dass bei einer Abweichung der Real-Anordnung eines Erntegutballens von dessen Soll-Anordnung die optimale Fahrroute unter Berücksichtigung der abweichenden Real-Anordnung wenigstens teilweise erneut ermittelt wird. In diesem Fall muss der Real-Anfahrweg des entsprechenden Erntegutballens noch nicht bekannt sein. Es muss auch noch keine Abweichung des Real-Anfahrwegs vom Soll-Anfahrweg erkennbar sein. Sofern aber bereits eine Abweichung der Real-Anordnung von der Soll-Anordnung erkennbar ist, kann diese bei der Neuplanung der optimalen Fahrroute berücksichtigt werden. Die abweichende Real-Anordnung kann im weiteren Verlauf ohnehin zu einem abweichenden Real-Anfahrweg führen, so dass auch dieses Kriterium zur Neu-Ermittlung greifen würde. Allerdings ist es möglich, anhand der abweichenden Real-Anordnung die Neu-Ermittlung früher durchzuführen. Insbesondere ist es auch möglich, mehr als nur den jeweils nächsten Erntegutballen zu berücksichtigen. Es wäre denkbar, dass die Sammeleinheit einen Erntegutballen anfährt, aber zum Beispiel sensorisch bereits festgestellt wird, dass beim darauffolgenden Erntegutballen eine Abweichung der Real-Anordnung vorliegt. Bei der Neu-Ermittlung der Fahrroute kann in diesem Fall zusätzlich zu einer möglichen Abweichung hinsichtlich des aktuell anzufahrenden Erntegutballens auch eine die Abweichung hinsichtlich des darauffolgenden Ballens berücksichtigt werden. Der berücksichtigte Erntegutballen muss nicht der bezüglich der (bisher geplanten) Fahrroute darauffolgende sein. Die Sammeleinheit könnte standardmäßig die Real-Anordnung jedes Erntegutballens ermitteln, der in ihren sensorischen Erfassungsbereich gelangt. Auch wenn hinsichtlich der geplanten Reihenfolge noch ein oder mehrere andere Erntegutballen vorab anzufahren sind, kann die Real-Anordnung des entsprechenden Erntegutballens bereits berücksichtigt werden. Hierdurch lässt sich frühzeitig eine höhere Planungssicherheit erreichen. Es ist auch möglich, dass die Anzahl der notwendigen Neu-Ermittlungen reduziert werden kann. Ähnlich wie oben hinsichtlich des abweichenden Real-Anfahrwegs beschrieben, ist es möglich, dass die Fahrroute nur dann wenigstens teilweise neu ermittelt wird, wenn die Abweichung als wesentlich eingestuft wird. Das heißt, hinsichtlich der Abweichung der Real-Anordnung von der Soll-Anordnung kann ein Kriterium definiert sein, wann eine Abweichung als wesentlich anzusehen ist. Ist dieses Kriterium nicht erfüllt, gilt die Abweichung als unwesentlich und wird vernachlässigt.

Wie bereits erwähnt, kann die Sammeleinheit manuell gesteuert werden, wobei ein Fahrer die Sammeleinheit zu den einzelnen Erntegutballen steuert. Gemäß einer anderen, bevorzugten Ausgestaltung fährt die Sammeleinheit die Erntegutballen autonom an und nimmt diese autonom auf. Das heißt die Sammeleinheit kann das Aufsammeln der Erntegutballen durchführen, ohne dass ein Benutzer sie steuert. In dieser Ausführungsform müssen die Real-Anordnung und der Real-Anfahrweg automatisch ermittelt werden, da andernfalls ein autonomes Anfahren der Erntegutballen nicht möglich ist. Allerdings könnten die Ermittlung von Real-Anordnung und Real-Anfahrweg einerseits und die autonome Steuerung der Sammeleinheit andererseits durch unterschiedliche Einheiten ausgeführt werden. Es kann aber als vorteilhaft angesehen werden, wenn diese Vorgänge durch dieselbe Einheit durchgeführt werden.

Die Soll-Anordnung eines Erntegutballens kann genau einer Position und/oder genau einer Orientierung entsprechen. Dementsprechend geht die Ermittlung der optimalen Fahrroute auch von der Prämisse aus, dass die Anordnung des jeweiligen Erntegutballens exakt bekannt ist. Wie bereits angedeutet, unterliegt die Bestimmung der Soll-Anordnung allerdings im Allgemeinen einer Unsicherheit. Diese kann zum Beispiel auf unterschiedlichen Ursachen beruhen. Falls zum Beispiel bei der Ballenablage eine Position und/oder eine Orientierung eines abgelegten Erntegutballens ermittelt werden, können Bewegungen des Erntegutballens während oder unmittelbar nach der Ballenablage, oder auch Messungenauigkeiten dazu führen, dass die Soll-Anordnung nicht exakt bestimmbar ist. Derartige Unsicherheiten oder Toleranzen können in einer bevorzugten Ausgestaltung des Verfahrens berücksichtigt werden, indem Anordnungsinformationen bereitgestellt werden, bei denen die Soll-Anordnung wenigstens eines Erntegutballens einer Anordnungsverteilung mit einer Mehrzahl von Anordnungsmöglichkeiten entspricht, wobei jeder Anordnungsmöglichkeit eine Anordnungswahrscheinlichkeit zugeordnet ist. Das heißt die Soll-Anordnung des Erntegutballens entspricht nicht genau einer räumlichen Anordnung (Position und/oder Orientierung), sondern einer Verteilung, die eine Mehrzahl möglicher Positionen und/oder Orientierungen umfasst. Das heißt es sind eine Mehrzahl von Anordnungsmöglichkeiten gegeben, wobei jeder Anordnungsmöglichkeit eine Anordnungswahrscheinlichkeit zugeordnet ist. Es könnte eine kontinuierliche Anordnungsverteilung zugrunde gelegt werden, wobei die Anordnungswahrscheinlichkeit einer Wahrscheinlichkeitsdichte entspräche. Unter Umständen ist allerdings eine Diskretisierung sinnvoll, wobei eine endliche Anzahl möglicher Positionen und Orientierungen zugrunde gelegt wird, denen jeweils eine Wahrscheinlichkeit zugewiesen wird. Die Zugrundelegung einer Anordnungsverteilung kann die Ermittlung der optimalen Fahrroute beeinflussen. Die primäre Konsequenz ist, dass die unterschiedlichen Anordnungsmöglichkeiten unterschiedlichen Endpunkten für den jeweiligen Soll-Anfahrweg entsprechen. Daher bestehen im Vergleich zu einer eindeutig definierten Anordnung mehr Möglichkeiten hinsichtlich der Festlegung des Soll-Anfahrwegs.

Eine Ausführungsform sieht vor, dass beim Ermitteln der optimalen Fahrroute für wenigstens einen Erntegutballen eine Auswahlanordnung aus der Mehrzahl von Anordnungsmöglichkeiten ausgewählt wird, wobei die Auswahlanordnung sowohl in Abhängigkeit von ihrer Anordnungswahrscheinlichkeit als auch vom Optimierungskriterium ausgewählt wird. Die Auswahlanordnung ist eine Anordnungsmöglichkeit, die aus der Anordnungsverteilung ausgewählt wird. Dem liegt die Prämisse zugrunde, dass für eine eindeutig bestimmte Fahrroute genau eine Anordnung des Erntegutballens angenommen werden muss, aus der sich dann ein Soll-Anfahrweg ergibt. Die Auswahl der Auswahlanordnung richtet sich teilweise nach der ihr zugeordneten Anordnungswahrscheinlichkeit, allerdings nicht ausschließlich. Das heißt es wird nicht zwangsläufig die wahrscheinlichste Anordnungsmöglichkeit ausgewählt. Zusätzlich wird auch das Optimierungskriterium berücksichtigt. Es wird also auch berücksichtigt, wie sich die Auswahl einer Anordnungsmöglichkeit auf die optimale Fahrroute auswirkt. Im Allgemeinen wird die optimale Fahrroute unterschiedlich vorteilhaft im Hinblick auf das Optimierungskriterium sein, je nachdem welche Anordnungsmöglichkeit ausgewählt wird. Zum Beispiel könnte eine erste Anordnungsmöglichkeit bedingen, dass die Sammeleinheit eine vergleichsweise enge Kurve fahren muss, um den Erntegutballen anzufahren, was sich nachteilig auf die Länge der Fahrroute und/oder die Fahrzeit auswirken kann. Eine zweite Anordnungsmöglichkeit könnte der Sammeleinheit ermöglichen, eine weniger enge Kurve zu fahren, also den Erntegutballen direkter anzufahren. Insofern wäre die zweite Anordnungsmöglichkeit vorteilhafter. Allerdings sind auch die Anordnungswahrscheinlichkeiten zu berücksichtigen. Wenn die der ersten Anordnungsmöglichkeit zugeordnete Anordnungswahrscheinlichkeit allerdings größer ist als die der zweiten Anordnungsmöglichkeit, kann unter Umständen dennoch die erste Anordnungsmöglichkeit ausgewählt werden. Ob dies der Fall ist, hängt insbesondere davon ab, in welcher Weise die Anordnungswahrscheinlichkeit berücksichtigt wird. Dies kann je nach Ausführungsform unterschiedlich gehandhabt werden. Qualitativ kann beispielsweise der Einfluss auf den oder die Optimierungswerte mit der Anordnungswahrscheinlichkeit gewichtet werden. Es sind aber eine Vielzahl von Ausgestaltungen denkbar. Zum Beispiel könnten Anordnungsmöglichkeiten unterhalb einer bestimmten Anordnungswahrscheinlichkeit grundsätzlich verworfen werden. Wenn die Soll-Anordnung einer Anordnungsverteilung entspricht, kann die oben genannte Ausführungsform, die eine Abweichung der Real-Anordnung berücksichtigt, modifiziert werden. In diesem Fall kann vorgesehen sein, dass bei einer Abweichung der Real-Anordnung eines Erntegutballens von dessen Auswahlanordnung die optimale Fahrroute unter Berücksichtigung der abweichenden Real-Anordnung wenigstens teilweise erneut ermittelt wird.

Bevorzugt werden die Anordnungsinformationen wenigstens teilweise auf Betriebsdaten einer Ballenpresseinheit basierend ermittelt, die die Erntegutballen in dem Bearbeitungsbereich abgelegt hat. Die Ballenpresseinheit weist eine Ballenpresse auf, die selbstfahrend ausgebildet sein kann. Alternativ kann die Ballenpresse aber auch von einem Schlepper gezogen werden, der ebenfalls als Teil der Ballenpresseinheit angesehen werden kann. Auch kann an die Ballenpresse eine Wickeleinheit angehängt sein, die den gepressten Erntegutballen mit einer Folie umwickelt, bevor er abgelegt wird. Auch die Wickeleinheit ist in diesem Fall Teil der Ballenpresseinheit. Die Ballenpresseinheit hat die Erntegutballen in einem der Ballenaufnahme vorausgehenden Bearbeitungsschritt gepresst und abgelegt. Betriebsdaten der Ballenpresseinheit können sämtliche Daten sein, die im Zusammenhang mit dem Betrieb der Ballenpresseinheit stehen. Dies können insbesondere Positionsdaten sein, die einer Position der Ballenpresseinheit entsprechen, und/oder Orientierungsdaten, die einer Orientierung der Ballenpresseinheit entsprechen. Falls die Ballenpresseinheit als Gespann ausgebildet ist, können auch Daten über die relative Anordnung der einzelnen Teile des Gespanns enthalten sein. Auch können die Betriebsdaten Zeitpunkt oder Ort einer Ballenablage entsprechen. Wenn beispielsweise bekannt ist, wann ein Erntegutballen abgelegt wurde, können hieraus Rückschlüsse auf die Anordnung des Erntegutballens gezogen werden, wenn Position und Orientierung der Ballenpresseinheit zu diesem Zeitpunkt bekannt sind. Sofern die Betriebsdaten in unmittelbarem Zusammenhang mit der Ballenablage stehen, können sie evtl. unmittelbar als Anordnungsinformationen genutzt werden. Allerdings kann auch berücksichtigt werden, dass Messfehler oder eine in den Betriebsdaten nicht erfasste Ballenbewegung zu einer Abweichung der Soll-Anordnung führen können. Die zugrunde liegende Bewegung des Erntegutballens (Rollen, Abprallen vom Boden etc.) kann unter Umständen nur statistisch beschrieben werden. Gleiches gilt für einen Messfehler. Daher kann insbesondere eine Anordnungsverteilung wenigstens teilweise basierend auf Betriebsdaten ermittelt werden.

Zusätzlich oder alternativ können die Anordnungsinformationen wenigstens teilweise auf Bereichsdaten basierend ermittelt werden, die eine Beschaffenheit des Bearbeitungsbereichs beschreiben. Zu solchen Bereichsdaten zählen zum Beispiel Daten, die ein Höhenprofil beschreiben. Wenn in einem Teilbereich des Bearbeitungsbereichs ein Gefälle vorliegt, kann es sein, dass sich die Erntegutballen bei der Ballenablage tendenziell in Richtung des Gefälles bewegen. Qualitativ kann sich die Soll-Anordnung dementsprechend verlagern. Abgesehen vom Höhenprofil kann aber auch die Bodenbeschaffenheit berücksichtigt werden. Diese kann beeinflussen, wie stark oder wie weit sich der Erntegutballen bewegt. Beispielsweise kann er auf unterschiedlichem Untergrund unterschiedlich gut rollen. So können zum Beispiel Bestandsreste wie Stoppeln den Erntegutballen abbremsen. Auch kann der Erntegutballen unterschiedlich stark vom Boden abprallen. Ein eher weicher Boden kann beim Aufprall mehr Energie absorbieren als ein harter Boden. Auch diese Effekte können insbesondere bei der Ermittlung einer Anordnungsverteilung berücksichtigt werden.

Bevorzugt beschreiben die Betriebsdaten wenigstens eine Pressen-Fahrroute der Ballenpresseinheit. Die Pressen-Fahrroute ist die Route, entlang welcher die Ballenpresseinheit innerhalb des Bearbeitungsbereichs gefahren ist, während sie die Erntegutballen abgelegt hat. Die Pressen-Fahrroute muss nicht lückenlos in den Betriebsdaten dokumentiert sein, es kann sich beispielsweise auch um Wegpunkte mit unter Umständen größerem Abstand handeln. Aus der Pressen-Fahrroute lässt sich zumindest ungefähr ableiten, in welchem Bereich Erntegutballen angeordnet sein können. Die Erntegutballen können insbesondere entlang der Pressen-Fahrroute angeordnet sein. Dies ist allerdings nicht zwangsläufig der Fall. Je nach Beschaffenheit der Erntegutballen, nach Art des Ablagevorgangs, nach Beschaffenheit des Untergrunds etc. kann sich auch eine deutliche Abweichung ergeben.

Vorteilhaft können die Betriebsdaten Positionen und/oder Orientierungen von Erntegutballen beschreiben. Diese Betriebsdaten können direkt von der Ballenpresseinheit erzeugt werden. Das heißt die Ballenpresseinheit kann unmittelbar bei der Ballenablage die Position und/oder die Orientierung des Erntegutballens ermitteln und als Teil der Betriebsdaten zur Verfügung stellen. Diese Betriebsdaten können unmittelbar als Anordnungsinformationen genutzt werden. Es wäre aber auch denkbar zu berücksichtigen, dass die Ballenpresseinheit den Erntegutballen zwar in einer bestimmten Position und Orientierung ablegt, der Erntegutballen sich aber noch bewegen könnte, ohne dass diese von der Ballenpresseinheit erfasst wird. Zum Beispiel könnte der Erntegutballen weiterrollen und/oder vom Boden abprallen, bevor er schließlich liegen bleibt. Derartige Prozesse können bei der Ermittlung der Anordnungsinformationen berücksichtigt werden, was dazu führt, dass eine Soll-Anordnung eines Erntegutballens nicht notwendigerweise die Position oder Orientierung wiedergibt, die in den Betriebsdaten enthalten ist.

Auch wenn Zeitpunkt oder Ort der jeweiligen Ballenablage nicht genau bekannt sind, können aus der Pressen-Fahrroute Rückschlüsse gezogen werden. Eine Ausführungsform sieht vor, dass zur Ermittlung der Anordnungsinformationen Positionen von Erntegutballen anhand der Pressen-Fahrroute sowie eines Ablageintervalls abgeschätzt werden. Das Ablageintervall ist eine Fahrstrecke, die die Ballenpresseinheit zwischen zwei Ballenablagen zurücklegt. Sofern man die Position eines Erntegutballens sowie die Pressen-Fahrroute kennt, ließen sich im Prinzip die Positionen aller Erntegutballen ermitteln, wenn das Ablageintervall bekannt ist. Dies beruht auf der Überlegung, dass die Ballenpresseinheit einen Erntegutballen ablegt, dann eine Entfernung entsprechend dem Ablageintervall entlang der Pressen-Fahrroute zurücklegt, und dann den nächsten Erntegutballen ablegt. Wenn also ein Erntegutballen entlang der Pressen-Fahrroute lokalisiert wurden, können die Soll-Anordnungen weiterer Erntegutballen in der beschriebenen Weise ermittelt werden.

Für die oben geschilderte Verfahrensvariante ist eine möglichst genaue Bestimmung des Ablageintervalls vorteilhaft. Dieses ist im Allgemeinen nicht konstant, sondern kann von verschiedenen Parametern abhängen. Insbesondere kann vorgesehen sein, dass das Ablageintervall anhand von Parametern ermittelt wird, die die Ballenpresseinheit, ein von der Ballenpresseinheit verarbeitetes Erntegut und/oder eine Witterung betreffen. Es versteht sich, dass die Ballenpresseinheit selbst, also deren Bauart und Betriebsweise, das Ablageintervall beeinflussen. Ist die Ballenpresseinheit eingerichtet, größere Erntegutballen zu produzieren, ergibt sich ein längeres Ablageintervall als bei kleineren Erntegutballen. Die Art und Beschaffenheit des Ernteguts, aus welchem die Erntegutballen hergestellt werden, beeinflusst ebenfalls das Ablageintervall. Für Stroh, für Gras oder für Heu ergibt sich jeweils ein anderes Ablageintervall. Auch hängt das Ablageintervall von der Bestandsdichte ab, die auch bei einem bestimmten Erntegut (zum Beispiel Gras) je nach Bodenbeschaffenheit und Wachstumsbedingungen unterschiedlich sein kann. Allerdings kann die Bestandsdichte zumindest näherungsweise ermittelt werden. Auch können Witterungsverhältnisse das Ablageintervall beeinflussen, insbesondere Niederschläge und Luftfeuchtigkeit, die wiederum den Feuchtegehalt des Ernteguts beeinflussen. Enthält das verpresste Erntegut viel Feuchtigkeit, hat es ein größeres Volumen und ein Erntegutballen bestimmter Größe ergibt sich nach einem kürzeren Ablageintervall.

Es ist auch möglich, dass zur Ermittlung der Anordnungsinformationen Orientierungen von Erntegutballen anhand der Pressen-Fahrroute abgeschätzt werden. Sofern man die Bauart und den Ablagevorgang der Ballenpresseinheit kennt, ergibt sich hieraus eine Relation zwischen der Orientierung der Ballenpresseinheit und der eines abgelegten Erntegutballens. Die Orientierung der Ballenpresseinheit kann wiederum aus der Pressen-Fahrroute ermittelt werden. Die lokale Ausrichtung der Pressen-Fahrroute kann annähernd der Orientierung der Ballenpresseinheit entsprechen, wenngleich sich je nach Aufbau der Ballenpresseinheit Abweichungen ergeben können, zum Beispiel in Abhängigkeit von Anzahl der Fahrzeuge in der Ballenpresseinheit, Anzahl und Anordnung der lenkbaren Achsen etc. Einige Ausführungsformen können zudem berücksichtigen, dass sich aufgrund eines Rollens und/oder Aufspringens des Erntegutballens die Orientierung bei der Ballenablage von der Orientierung des liegenden Erntegutballens unterscheiden kann.

Soweit Informationen darüber vorhanden sind, wann oder wo die Ballenpresseinheit einen Erntegutballen abgelegt hat, ist es sinnvoll, die Soll-Anordnung in Relation hierzu zu bestimmen. Dabei können entweder Angaben über die Anordnung der Ballenpresseinheit genutzt werden oder - sofern diese zum Beispiel durch die Ballenpresseinheit zur Verfügung gestellt werden - Angaben über die Anordnung des Erntegutballens beim Ablegen desselben. Eine Ausgestaltung sieht vor, dass zur Ermittlung der Soll-Anordnung einer Mehrzahl von Erntegutballen eine Ablageanordnung zugrunde gelegt wird, die einer Position und/oder Orientierung der Ballenpresseinheit oder des jeweiligen Erntegutballens beim Ablegen des Erntegutballens entspricht, und diese kombiniert wird mit einer relativ zur Ablageanordnung gegebenen Relativanordnung des Erntegutballens. Das heißt es wird eine Ablageanordnung zugrunde gelegt, die mit einer Relativanordnung kombiniert wird. Die Relativanordnung ist eine Anordnung relativ zu der Ablageanordnung, das heißt in einem durch die Ablageanordnung festgelegten Bezugssystem. Die Ablageanordnung kann einer Position und/oder Orientierung der Ballenpresseinheit entsprechen. Dies kann sich auf unterschiedliche Teile der Ballenpresseinheit beziehen. Im Fall eines Gespanns kann die Orientierung der Ballenpresse herangezogen werden, sowie die Position eines beliebigen Teils derselben, zum Beispiel eines Teils, von dem aus der Erntegutballen abgelegt oder abgeworfen wird. Die Relativanordnung könnte zum Beispiel eine Position definieren, die um eine bestimmte Distanz hinter der Position der Ballenpresseinheit angeordnet ist, wobei die Richtungen "vorne" und "hinten" anhand der Ablageanordnung definierbar sind. Im Fall einer Anordnungsverteilung könnte eine Mehrzahl von Positionen definiert sein, die zum Beispiel innerhalb eines Abstandsintervalls hinter der Ballenpresseinheit liegen. Für jeden Ablagevorgang entlang der Pressen-Fahrroute ergibt sich eine unterschiedliche Ablageanordnung, da sich Position und gegebenenfalls Orientierung der Ballenpresseinheit ändern. Aufgrund dessen ergeben sich für eine Mehrzahl von Erntegutballen unterschiedliche Soll-Anordnungen, auch wenn stets die gleiche Relativanordnung zugrunde gelegt wird. Es ist allerdings zusätzlich möglich, dass die Relativanordnung verändert wird. Die Veränderung kann in Abhängigkeit von Parametern erfolgen, die zum Beispiel den Bearbeitungsbereich beschreiben. So könnte insbesondere ein lokal vorhandenes Gefälle berücksichtigt werden. In Abhängigkeit von einem derartigen Gefälle könnte die Relativanordnung modifiziert werden.

Die Soll-Anordnung der jeweiligen Erntegutballen kann einmalig festgelegt und danach nicht mehr verändert werden. Es ist aber auch denkbar, dass die Soll-Anordnung für diejenigen Erntegutballen, die noch nicht angefahren wurden, angepasst werden kann. Dabei können insbesondere Erfahrungen hinsichtlich der bereits angefahrenen und aufgenommenen Erntegutballen genutzt werden. Eine Ausführungsform sieht vor, dass die Soll-Anordnung wenigstens eines noch anzufahrenden Erntegutballens basierend auf der Real-Anordnung wenigstens eines bereits angefahrenen Erntegutballens aktualisiert wird. Im Fall einer Anordnungsverteilung kann dies insbesondere auf einem Abgleich der Real-Anordnung mit der Anordnungsverteilung des bereits angefahrenen Erntegutballens basieren. Wenn die Real-Anordnung einer Anordnungsmöglichkeit entspricht, der nur eine sehr geringe Anordnungswahrscheinlichkeit zugeordnet war, kann dies auf eine fehlerhafte Anordnungsverteilung hindeuten. Eine solche Annahme liegt vor allem dann nahe, wenn die Real-Anordnungen mehrerer Erntegutballen ähnliche Abweichungen zeigen. Zum Beispiel könnten die Erntegutballen im Allgemeinen weiter von der Ablageposition entfernt sein, als dies aufgrund der Anordnungsverteilung zu erwarten wäre. Auf Basis dieser Erfahrung könnte die Anordnungsverteilung (insbesondere die Anordnungsmöglichkeiten mit erhöhter Anordnungswahrscheinlichkeit) weiter von der Ablageposition weg verlagert werden. Diese rein qualitativ beschriebene Form der Anpassung kann unterschiedlich implementiert werden. Auch andere Formen der Anpassung sind denkbar, zum Beispiel eine Ausdehnung oder Verengung der Anordnungsverteilung, womit eine größere oder kleinere Streuung der Positionen und/oder Orientierungen der Erntegutballen berücksichtigt werden kann. Neben diesen Beispielen sind auch andere Formen der Anpassung denkbar. Die Aktualisierung der Soll-Anordnung eines noch anzufahrenden Erntegutballens kann insbesondere durchgeführt werden, indem die Relativanordnung aktualisiert wird. Dies deshalb, weil sich bestimmte Fehler in der Relativanordnung in qualitativ gleicher Weise bei allen Erntegutballen auswirken. Daher kann man davon ausgehen, dass eine Korrektur, die bei bereits angefahrenen Erntegutballen zu einer besseren Übereinstimmung mit der Real-Position führt, eine vergleichbare Auswirkung bei noch anzufahrenden Erntegutballen hat.

Durch die Erfindung wird außerdem ein Computersystem zur Verfügung gestellt. Diese dient zur Planung der Aufnahme von Erntegutballen, die in einem Bearbeitungsbereich angeordnet sind, durch eine Sammeleinheit, wobei das Computersystem eingerichtet ist:

- Anordnungsinformationen, die jeweils einer erwarteten Soll-Anordnung jedes einer Mehrzahl von Erntegutballen entsprechen, zu erfassen,
- rechnergestützt eine optimale Fahrroute zur Aufnahme der Mehrzahl von Erntegutballen zu ermitteln anhand der Anordnungsinformationen, entsprechend einem definierten Optimierungskriterium zur Fahrrouteoptimierung, wobei die optimale Fahrroute einen Soll-Anfahrweg für jeden Erntegutballen enthält, entlang dessen der Erntegutballen anzufahren ist, und
- einen Real-Anfahrweg zu erfassen, wenn ein Anfahren der Erntegutballen durch die Sammeleinheit erfolgt, wobei bei Annäherung an den jeweiligen Erntegutballen eine Real-Anordnung desselben ermittelt wird und der Erntegutballen entsprechend der Real-Anordnung entlang des Real-Anfahrwegs angefahren wird.

Erfindungsgemäß ist das Computersystem eingerichtet, bei einer Abweichung des Real-Anfahrwegs eines Erntegutballens vom Soll-Anfahrweg die optimale Fahrroute unter Berücksichtigung des abweichenden Real-Anfahrwegs wenigstens teilweise erneut rechnergestützt zu ermitteln.

Das Computersystem weist wenigstens einen Computer oder einen Rechner oder eine Datenverarbeitungseinheit auf. Es kann auch weitere Komponenten aufweisen, zum Beispiel drahtlose und/oder drahtgebundene Schnittstellen zur ein- oder beidseitigen Kommunikation mit anderen Vorrichtungen. Insbesondere kann es sich bei dem Computersystem um ein Farm-Management-Informationssystem handeln, welches außerhalb der Sammeleinheit angeordnet ist, zum Beispiel stationär innerhalb eines Gebäudes. Das Computersystem könnte auch in einer mobilen Einheit, beispielsweise Laptop, Tablet, Smartphone etc., angeordnet sein, welche Steueranweisungen für einen Fahrer der Sammeleinheit anzeigt oder Steuerdaten, insbesondere drahtlos, an die Sammeleinheit übermittelt. Allgemeiner gesprochen kann das Computersystem extern bezüglich der Sammeleinheit ausgebildet und dazu eingerichtet sein, die Steuerdaten zur Übertragung an die Sammeleinheit zu erzeugen. Es kann eine Schnittstelle zur Datenübertragung an die Sammeleinheit aufweisen und dazu eingerichtet sein, die Steuerdaten, insbesondere drahtgebunden und/oder drahtlos, an die Sammeleinheit zu übertragen. Alternativ kann das Computersystem in die Sammeleinheit integriert sein, das heißt, es kann ein Teil der Sammeleinheit sein und innerhalb dieser angeordnet sein. Das Computersystem kann in jedem Fall teilweise softwaremäßig realisiert sein.

Die weiteren Begriffe wurden bereits mit Bezug auf das erfindungsgemäße Verfahren erläutert und werden daher nicht nochmals erklärt. Bevorzugte Ausführungsformen des erfindungsgemäßen Computersystems entsprechen denen des erfindungsgemäßen Verfahrens.

Im Folgenden wird die Erfindung anhand von Figuren beschrieben. Die Figuren sind lediglich beispielhaft und schränken den allgemeinen Erfindungsgedanken nicht ein. Es zeigen

Fig.1 eine schematische Draufsicht eines Bearbeitungsbereichs mit einer Ballenpresseinheit sowie eines erfindungsgemäßen Computersystems;

Fig.2 eine schematische Draufsicht des Bearbeitungsbereichs mit einer Sammeleinheit sowie des Computersystems;

Fig.3A, 3B Draufsichten eines Teils des Bearbeitungsbereichs mit einer optimalen Fahrroute vor und nach einer Neu-Ermittlung;

Fig.4A-4C    schematische Darstellungen einer Ablageanordnung und einer Relativanordnung;

Fig.5A, 5B    Draufsichten eines Teils des Bearbeitungsbereichs mit Soll-Anordnungen von Erntegutballen vor und nach einer Neu-Ermittlung;

Fig.6    ein Flussdiagramm eines erfindungsgemäßen Verfahrens;

Fig.7A-9C    schematische Darstellungen mit jeweils einer Ablageanordnung und einer Relativanordnung; sowie

Fig.10    eine Draufsichten eines Teils des Bearbeitungsbereichs mit Soll-Anordnungen von Erntegutballen, einer optimalen Fahrroute sowie von nicht-optimalen Fahrrouten.

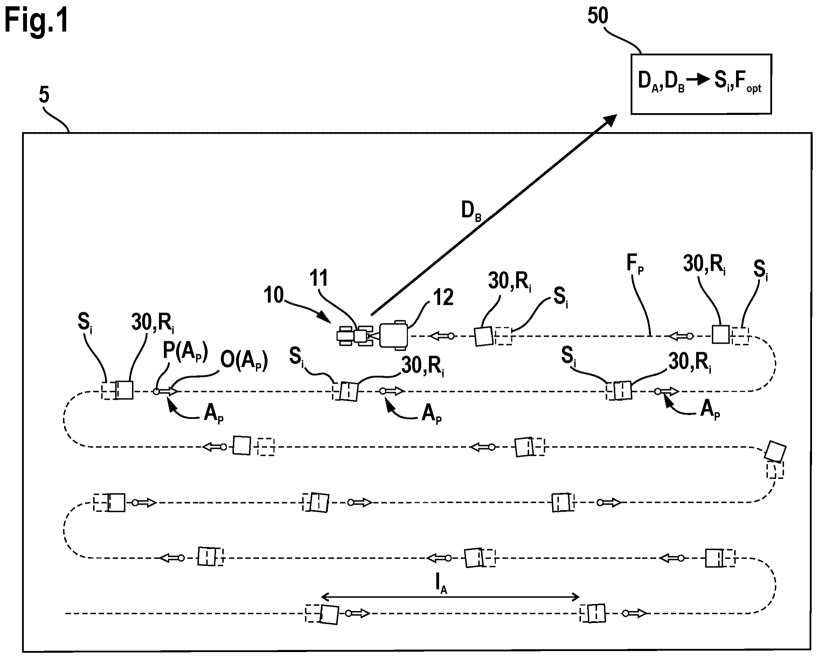

Fig. 1 zeigt einen Bearbeitungsbereich 5 mit einer Ballenpresseinheit 10, welche entlang einer Pressen-Fahrroute $F_P$ fährt. Die Ballenpresseinheit 10, die in diesem Fall durch einen Schlepper 11 sowie eine daran angehängte Ballenpresse 12 gebildet ist, nimmt auf dem Boden des Bearbeitungsbereichs liegendes Erntegut (nicht dargestellt) auf und verpresst es zu Erntegutballen 30, beispielsweise zu Rundballen oder Quaderballen. Nach und nach wird auf diese Weise ein Mehrzahl von Erntegutballen 30 im Bearbeitungsbereich 5 abgelegt, wobei sich eine Real-Anordnung $R_i$ der Erntegutballen 30 in etwa an der Pressen-Fahrroute $F_P$ orientiert. Hier und im Folgenden steht "i" als Index für eine Nummer, die dem jeweiligen Erntegutballen 30 zugeordnet werden kann. Zwischen zwei aufeinanderfolgend abgelegten Erntegutballen 30 ist ein Ablageintervall $I_A$ gegeben, dessen Länge in Abhängigkeit von einer Reihe von Faktoren variieren kann. Zunächst hängt das Ablageintervall $I_A$ von Bauform und Typ der Ballenpresse 12 ab sowie gegebenenfalls von an der Ballenpresse 12 einstellbaren Parametern wie zum Beispiel einem Ballendurchmesser. Weiterhin beeinflussen Art und Beschaffenheit des Ernteguts, aus welchem die Erntegutballen 30 hergestellt werden, das Ablageintervall $I_A$. Zur Beschaffenheit des Ernteguts zählt auch eine Bestandsdichte, die je nach Bodenbeschaffenheit und Wachstumsbedingungen unterschiedlich sein kann. Schließlich können Witterungsverhältnisse das Ablageintervall $I_A$ beeinflussen, insbesondere Niederschläge und Luftfeuchtigkeit. Diese verändern den Feuchtegehalt des Ernteguts und somit dessen Komprimierbarkeit.

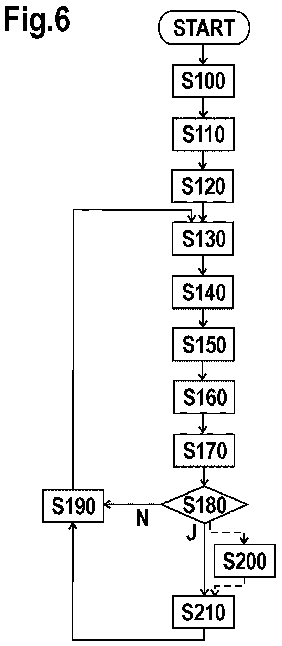

In Fig.6 ist ein Flussdiagramm einer Ausführungsform eines erfindungsgemäßen Verfahrens gezeigt. In einem ersten Schritt S100 sendet die Ballenpresseinheit 10 Betriebsdaten $D_B$ an ein erfindungsgemäßes Computersystem 50. Dieses kann beispielsweise stationär in einem Gebäude angeordnet sein. Auch wenn in der schematischen Darstellung in Fig.1 das Computersystem 50 neben dem Bearbeitungsbereich 5 gezeigt ist, kann es in der Realität von diesem weit entfernt sein. Es kann beispielsweise in einem landwirtschaftlichem Betrieb stehen, dem der Bearbeitungsbereich 5 zugeordnet ist. Die Kommunikation der Ballenpresseinheit 10 mit dem Computersystem 50 erfolgt drahtlos, zum Beispiel über ein Mobilfunknetz. Die Betriebsdaten $D_B$ können unterschiedlichen Inhalt haben. Insbesondere können sie die Pressen-Fahrroute $F_P$ beschreiben, zum Beispiel in Form von GNSS-Koordinaten, die seitens der Ballenpresseinheit 10 ermittelt wurden. Wie in Fig.1 angedeutet, kann für jeden Erntegutballen 30 eine Ablageanordnung $A_P$ ermittelt und übertragen werden. Die Ablageanordnung $A_P$ enthält in diesem Fall eine translatorische Position P sowie eine rotatorische Orientierung O der Ballenpresse 12 bei der Ballenablage, also zu dem Zeitpunkt, in dem ein fertiger Erntegutballen 30 die Ballenpresse 12 verlässt. Die in den Figuren als leerer Pfeil dargestellte Orientierung O entspricht der momentanen Fahrtrichtung der Ballenpresse 12, verläuft also (anti-) parallel zu deren Längsachse.

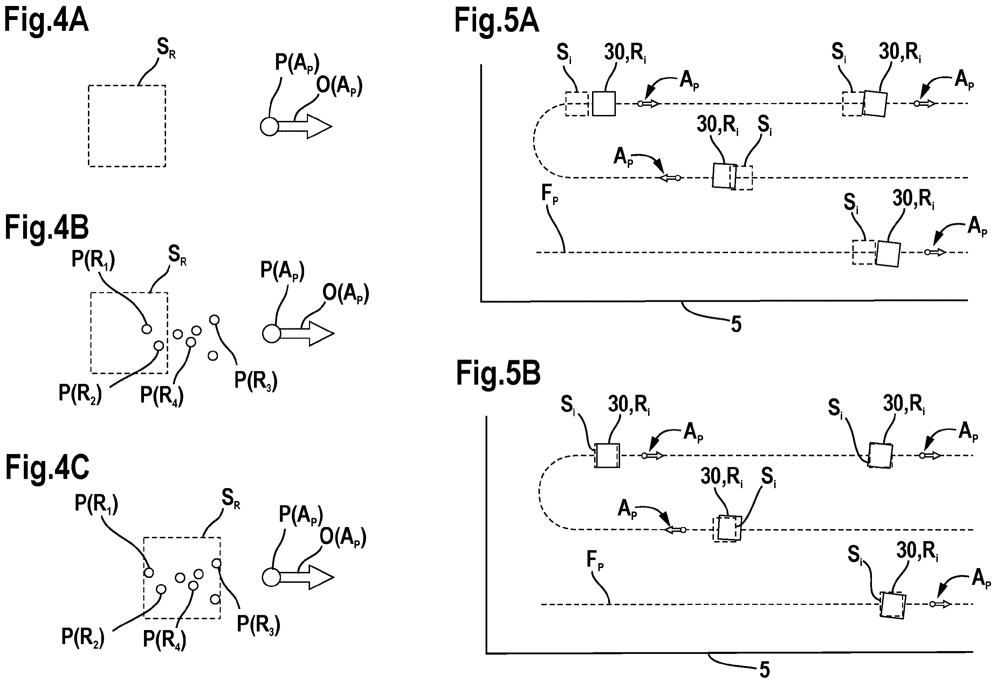

In einem weiteren Schritt S110 ermittelt das Computersystem 50 aus den Betriebsdaten $D_B$, insbesondere aus den Ablageanordnungen $A_P$, für jeden Erntegutballen 30 eine Soll-Anordnung $S_i$. Das Computersystem 50 kann auch Bereichsdaten $D_A$ einbeziehen, die eine Beschaffenheit des Bearbeitungsbereichs 5 beschreiben. Derartige Bereichsdaten $D_A$ können zum Beispiel die Bodenbeschaffenheit beschreiben oder ein lokal vorliegendes Gefälle G. Die Bereichsdaten $D_A$ können allgemein die Bewegung eines Erntegutballens 30 nach dem Verlassen der Ballenpresse 12 beeinflussen. Die Soll-Anordnung $S_i$ enthält eine translatorische Position P sowie eine rotatorische Orientierung O des jeweiligen Erntegutballens 30. Sie entspricht dabei einer erwarteten Anordnung, die zumindest begrifflich von einer Real-Anordnung $R_i$ des Erntegutballens 30 zu unterscheiden ist, welches dessen tatsächliche Anordnung ist. Die Soll-Anordnungen $S_i$ bilden Anordnungsinformationen, die die Grundlage für weitere Verfahrensschritte bilden. Zur Ermittlung der Sollanordnung $S_i$ kann das Computersystem 50 von der Ablageanordnung $A_P$ ausgehen und diese mit einer Relativanordnung $S_R$ kombinieren, die die Anordnung des Erntegutballens 30 im Bezugssystem der Ablageanordnung $A_P$ beschreibt. Fig.4A zeigt beispielhaft eine Relativanordnung $S_R$, wobei die gestrichelte Linie der Kontur eines Erntegutballens 30 in dieser Relativanordnung $S_R$ entspricht. Der erkennbare Versatz gegenüber der Ablageanordnung $A_P$ kann auf einem konstruktiv gegebenen Positionsunterschied beruhen zwischen der Stelle, an welcher der Erntegutballen 30 die Ballenpresse 12 verlässt, sowie der Stelle, an welcher ein Positionssensor angeordnet ist, der die Ablageanordnung $A_P$ ermittelt. Darüber hinaus kann auch berücksichtigt werden, dass sich der Erntegutballen 30 nach der dem Verlassen der Ballenpresse 12 noch weiter bewegt, zum Beispiel rollt oder aufspringt.

Eine andere Möglichkeit zu Bestimmung der Soll-Anordnungen $S_i$ könnte darin bestehen, dass die Ballenpresseinheit 10 die Position P und die Orientierung O des abgelegten Erntegutballens 30 erfasst und diese direkt mit den Betriebsdaten $D_B$ an das Computersystem 50 übermittelt. Wiederum eine andere Möglichkeit bestünde darin, dass das Ablageintervall $I_A$ abgeschätzt wird und dann ausgehend vom Anfangspunkt der Pressen-Fahrroute $F_P$ die Anordnungen der Erntegutballen 30 entlang der Pressen-Fahrroute $F_P$ ermittelt werden. Die jeweilige Orientierung eines Erntegutballens 30 kann anhand der sich anhand des Verlaufs der Pressen-Fahrroute $F_P$ ergebenden Fahrtrichtung der Ballenpresseneinheit 20 abgeschätzt werden.

Unabhängig davon, wie die Anordnungsinformationen bereitgestellt werden, besteht die Möglichkeit, dass die Soll-Anordnung $S_i$ eines Erntegutballens 30 von seiner Real-Anordnung $R_i$ abweicht. In Fig.1 trifft dies für alle Erntegutballen 30 zu.

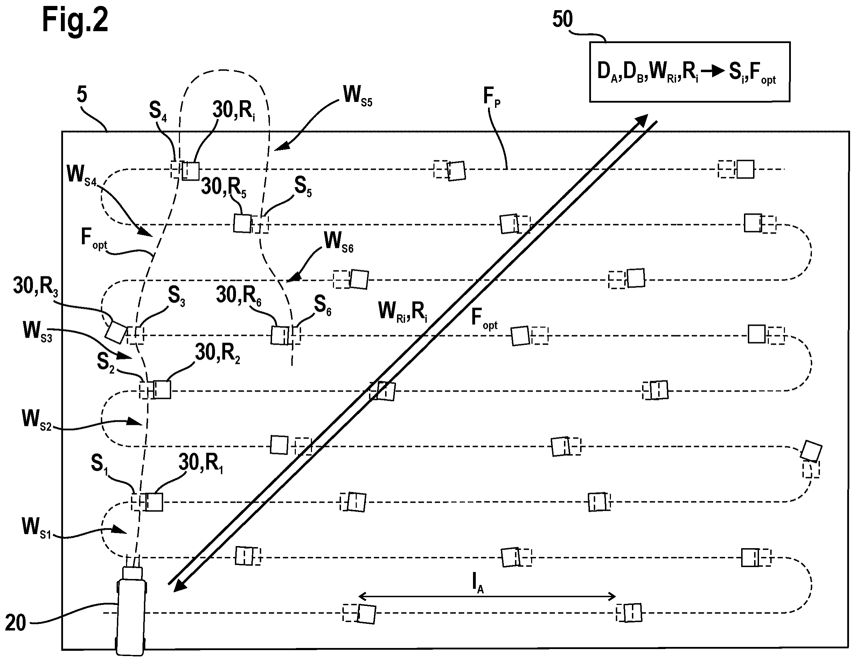

In einem Schritt S120 ermittelt das Computersystem 50 auf Basis der Anordnungsinformationen eine optimale Fahrroute $F_{opt}$ für eine Sammeleinheit 20, die die Erntegutballen 30 aufnehmen soll. Dabei wird ein Optimierungskriterium zugrunde gelegt, das auf eine Optimierung eines oder mehrerer Optimierungswerte gerichtet ist, also einer Minimierung oder Maximierung. Mögliche Optimierungswerte sind zum Beispiel eine Fahrstrecke, eine Fahrzeit oder ein Energieverbrauch. Auch eine gewichtete Kombination dieser Optimierungswerte kann zugrunde gelegt werden. Fig.2 zeigt einen Teil der so ermittelten Fahrroute $F_{opt}$, die entlang der Soll-Anordnungen $S_1$-$S_6$ von sechs beispielhaft gezeigten Erntegutballen 30 verläuft. Dabei bildet jeweils ein Teilabschnitt der optimalen Fahrroute $F_{opt}$ einen Soll-Anfahrweg $W_{S1}$-$W_{S6}$ zu einem der Erntegutballen 30.

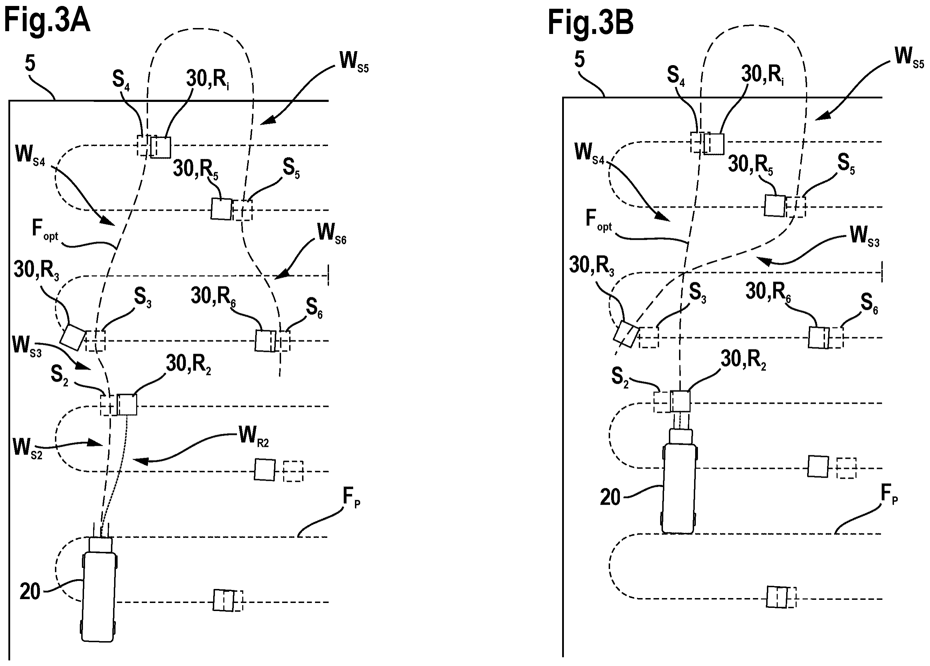

In einem nächsten Schritt S130 des Verfahrens fährt die Sammeleinheit 20 einen Erntegutballen 30 an. Die Sammeleinheit 20 ist in Fig.2 als einzelnes Fahrzeug dargestellt, es könnte sich aber auch beispielsweise um ein Gespann handeln. Die Sammeleinheit 20 kann von einem Fahrer gelenkt werden, sie kann aber auch autonom fahren. Beim Anfahren eines Erntegutballens 30 wird in einem Schritt S140 die Real-Anordnung $R_1$-$R_6$ desselben ermittelt, zum Beispiel mittels nicht dargestellter Sensoren der Sammeleinheit 20. Insbesondere wenn sich die Real-Anordnung $R_1$-$R_6$ von der Soll-Anordnung $S_1$-$S_6$ unterscheidet, wird der Erntegutballen 30 nicht entlang des Soll-Anfahrwegs $W_{S1}$-$W_{S6}$ angefahren. Eine Abweichung vom Soll-Anfahrweg $W_{S1}$-$W_{S6}$ kann allerdings auch auf anderen Ursachen beruhen, zum Beispiel auf einer spontanen Entscheidung des Fahrers, auf einem Hindernis, dem die Sammeleinheit 20 ausweichen muss, oder dergleichen. Fig.3A zeigt beispielhaft, wie beim zweiten Erntegutballen 30 statt des Soll-Anfahrwegs $W_{S2}$ ein abweichender Real-Anfahrweg $W_{R2}$ genutzt wird. Dieser kann dadurch entstehen, dass die Sammeleinheit 20 von einem Fahrer entsprechend manuell gesteuert wird, er kann aber auch automatisch ermittelt werden und die Sammeleinheit 20 kann sich autonom entsprechend steuern.

In jedem Fall wird in einem Schritt S150 der Real-Anfahrweg $W_{Ri}$ erfasst. Anschließend wird er zusammen mit wenigstens einer Real-Anordnung Ri an das Computersystem 50 übermittelt. Dabei kann zum einen die Real-Anordnung $R_i$ des jeweils aktuell angefahrenen Erntegutballens 30 übermittelt werden, zum anderen kann aber auch die Real-Anordnung $R_i$ wenigstens eines weiteren Erntegutballens 30 übermittelt werden, sofern diese bereits bekannt ist. Im Beispiel von Fig.3A kann die Sammeleinheit 20 beispielsweise die Real-Anordnung R3 des dritten Erntegutballens 30 erkennen, noch während sie den zweiten Erntegutballen 30 anfährt.

In einem weiteren Schritt S160 wird seitens des Computersystems 50 geprüft, ob der Real-Anfahrweg $W_{Si}$ vom Soll-Anfahrweg $W_{Si}$ abweicht. Dabei können anhand eines definierten Kriteriums als geringfügig eingestufte Abweichungen vernachlässigt werden. Weiterhin wird in einem Schritt S170 geprüft, ob eine der übermittelten Real-Anordnungen $R_i$ von der zugehörigen Soll-Anordnung $S_i$ abweicht, wobei wiederum geringfügige Abweichungen vernachlässigt werden können. In einem Schritt S180 wird abgefragt, ob eine als wesentlich erachtete Abweichung vorliegt. Ist dies nicht der Fall, wird in einem Schritt S190 der nächste Erntegutballen 30 ausgewählt und das Verfahren kehrt zu Schritt S130 zurück. Wurde allerdings eine Abweichung festgestellt, wird in einem Schritt S210 die Fahrroute $F_{opt}$ für die verbleibenden Erntegutballen 30 neu ermittelt. Dabei wird zum einen die veränderte Ausgangslage der Sammeleinheit 20 aufgrund eines abweichenden Real-Anfahrwegs $W_{Ri}$ berücksichtigt, zum anderen auch die abweichenden Real-Anordnungen $R_i$, soweit diese bekannt sind. Das heißt die neu ermittelte Fahrroute $F_{opt}$ orientiert sich bei denjenigen Erntegutballen 30, bei denen Real-Anordnungen $R_i$ bereits bekannt sind, an diesen und nicht an den Soll-Anordnungen $S_i$. Fig.3B zeigt beispielhaft eine geänderte Fahrroute $F_{opt}$, die sich aufgrund der Abweichungen beim Real-Anfahrweg $W_{R2}$ sowie bei den Real-Anordnungen $R_2$, $R_3$ ergibt. Insbesondere hat sich gegenüber den Soll-Anordnungen $S_2$, $S_3$ die relative Lage des zweiten und dritten Erntegutballens 30 so ungünstig verändert, dass ein direktes Anfahren des dritten Erntegutballens 30 nicht oder nur durch aufwändiges Manövrieren möglich wäre. Daher wird bei der neu ermittelten Fahrroute $F_{opt}$ der dritte Erntegutballen 30 zunächst ausgelassen und stattdessen der vierte Erntegutballen 30 angefahren, da sich dieser entsprechend seiner Soll-Anordnung $S_4$ problemlos erreichen lässt.

In einem optionalen Schritt S200 können auch die Soll-Anordnungen $S_i$ der noch nicht angefahrenen Erntegutballen 30 angepasst werden. Dieser Schritt wird, wie in Fig.6 gezeigt, vorteilhaft vor der Neu-Ermittlung der Fahrroute $F_{opt}$ in Schritt S210 durchgeführt. Das zugrundeliegende Prinzip wird nachfolgend anhand von Fig.4A-4C erläutert. Fig.4A zeigt die anfangs gegebene Relativanordnung $S_R$. Fig.4B zeigt beispielhaft eine Mehrzahl von Positionen P, die entsprechend Real-Anordnungen $R_i$ ermittelt wurden, wobei jeweils die Position relativ zur Ablageanordnung $A_P$ dargestellt ist. Erkennbar liegen die Positionen P alle näher an der Position der Ablageanordnung $A_P$ als aufgrund der Relativanordnung $S_R$ zu erwarten wäre. Dies kann zum Beispiel daran liegen, dass Eigenschaften des Bearbeitungsbereichs 5 oder Eigenschaften der Erntegutballen 30 falsch eingeschätzt wurden. Es könnte auch ein systematischer Fehler bei der Ermittlung der Ablageanordnung $A_P$ zugrunde liegen. Die Soll-Anordnungen $S_i$ sind dementsprechend im Vergleich zu den Real-Anordnungen $R_i$ entgegen der Fahrtrichtung nach hinten versetzt, wie in Fig.5A dargestellt ist. Entsprechend der erkannten Diskrepanz wird die Relativanordnung $S_R$ angepasst, wie in Fig.4C dargestellt. Da die Relativanordnung $S_R$ bei der Ermittlung der Soll-Anordnungen $S_i$ sämtlicher Erntegutballen 30 genutzt wird, verschieben sich die Soll-Anordnungen $S_i$ in Fahrtrichtung vorwärts, wie in Fig.5B dargestellt ist. Dadurch wird eine bessere Übereinstimmung mit den Real-Anordnungen $R_i$ erreicht. In einer oben genannten Verfahrensvariante, bei der die Ballenpresseinheit 10 keine Ablageanordnung $A_P$ übermittelt, sondern die Soll-Anordnung $S_i$ anhand des Ablageintervalls $I_A$ abgeschätzt wird, kann auch das Ablageintervall $I_A$ anhand von festgestellten Real-Anordnungen $R_i$ angepasst werden, woraus sich wiederum geänderte Soll-Anordnungen $S_i$ ergeben.

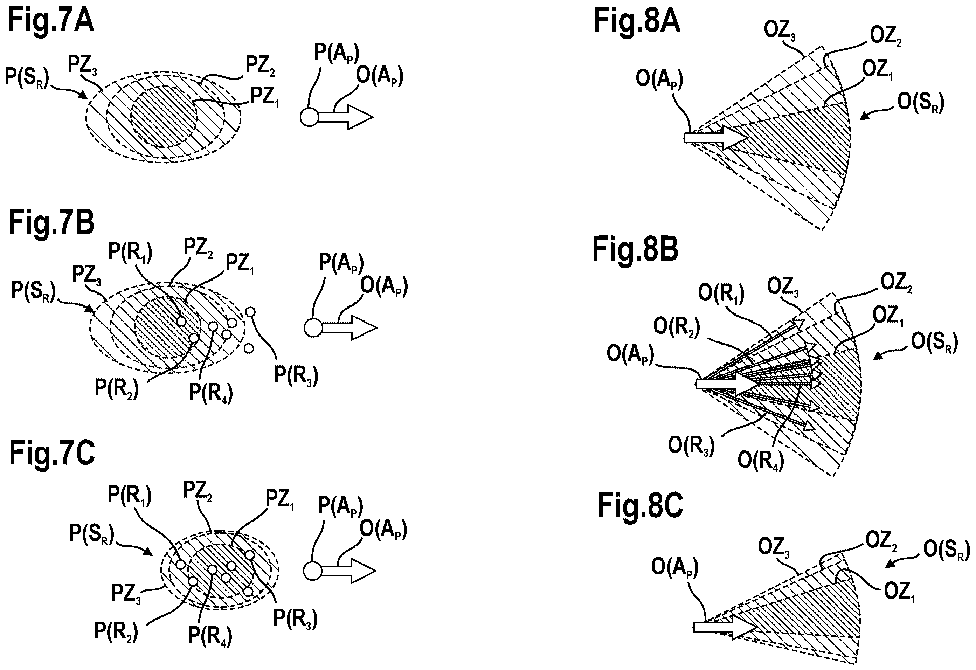

In den bisherigen Beispielen entsprach die Soll-Anordnung $S_i$ eines Erntegutballens 30 genau einer Position P und genau einer Orientierung O. Fig.7A-7C sowie 8A-8C illustrieren eine alternative Beschreibung, bei der die Soll-Anordnung $S_i$ einer Anordnungsverteilung entspricht. Dabei sind eine Mehrzahl von Anordnungsmöglichkeiten gegeben, von denen jeder eine Anordnungswahrscheinlichkeit zugeordnet ist. Aus Darstellungsgründen sind die Wahrscheinlichkeiten für die Positionen P und für die Orientierungen O getrennt gezeigt. Fig.7A zeigt ähnlich wie Fig.4A die Anordnungsverteilung in Relation zur Ablageanordnung $A_P$. Vereinfachend sind drei Positionszonen $PZ_1$, $PZ_2$ und $PZ_3$ gezeigt, innerhalb derer die Anordnungsmöglichkeiten liegen. In einer ersten Positionszone $PZ_1$ ist die Anordnungswahrscheinlichkeit hoch, in einer zweiten Positionszone $PZ_2$ niedriger und in einer dritten Positionszone $PZ_3$ am niedrigsten. Selbstverständlich kann statt einer zonenweise konstanten Anordnungswahrscheinlichkeit auch eine kontinuierliche variierende Anordnungswahrscheinlichkeit angenommen werden. Fig.7B zeigt mehrere Positionen P, die Real-Anordnungen $R_1$-$R_5$ zugeordnet sind, wobei wiederum die Position P relativ zur Ablageanordnung $A_P$ dargestellt ist. Nur ein kleiner Teil der Positionen P liegt in der ersten Positionszone $PZ_1$, während die meisten Positionen P einseitig demgegenüber verlagert sind. Außerdem sind alle Positionen P in einem Bereich konzentriert, der deutlich kleiner ist als die Gesamtausdehnung der drei Positionszonen $PZ_1$-$PZ_3$. Beides deutet auf eine fehlerhafte Anordnungsverteilung hin. Dementsprechend kann, wie in Fig.7C dargestellt, die Anordnungsverteilung angepasst werden. In dem gezeigten Beispiel werden die drei Positionszonen $PZ_1$-$PZ_3$ näher zur Ablageanordnung $A_P$ hin verlagert und die Ausdehnung der zweiten und dritten Positionszone $PZ_2$, $PZ_3$ wird reduziert.

Fig.8A zeigt drei Orientierungszonen $OZ_1$, $OZ_2$ und $OZ_3$, innerhalb derer die Orientierungen der Anordnungsmöglichkeiten liegen. In einer ersten Orientierungszone $OZ_1$ ist die Anordnungswahrscheinlichkeit hoch, in einer zweiten Orientierungszone $OZ_2$ niedriger und in einer dritten Orientierungszone $OZ_3$ am niedrigsten. Auch hier könnte alternativ eine kontinuierliche variierende Anordnungswahrscheinlichkeit angenommen werden. Fig.8B zeigt mehrere Orientierungen O, die Real-Anordnungen $R_1$-$R_5$ zugeordnet sind. Diese sind nicht gleichmäßig um die Orientierung O der Ablageanordnung $A_P$ verteilt, sondern zu einer Seite hin verlagert. Außerdem sind die Orientierungen P in einem Bereich angeordnet, der kleiner ist als die Gesamtausdehnung der drei Orientierungszonen $OZ_1$-$OZ_3$.

Dementsprechend kann, wie in Fig.8C dargestellt, die Anordnungsverteilung angepasst werden, indem die drei Orientierungszonen $OZ_1$-$OZ_3$ einseitig verlagert werden und ihre Ausdehnung reduziert wird.

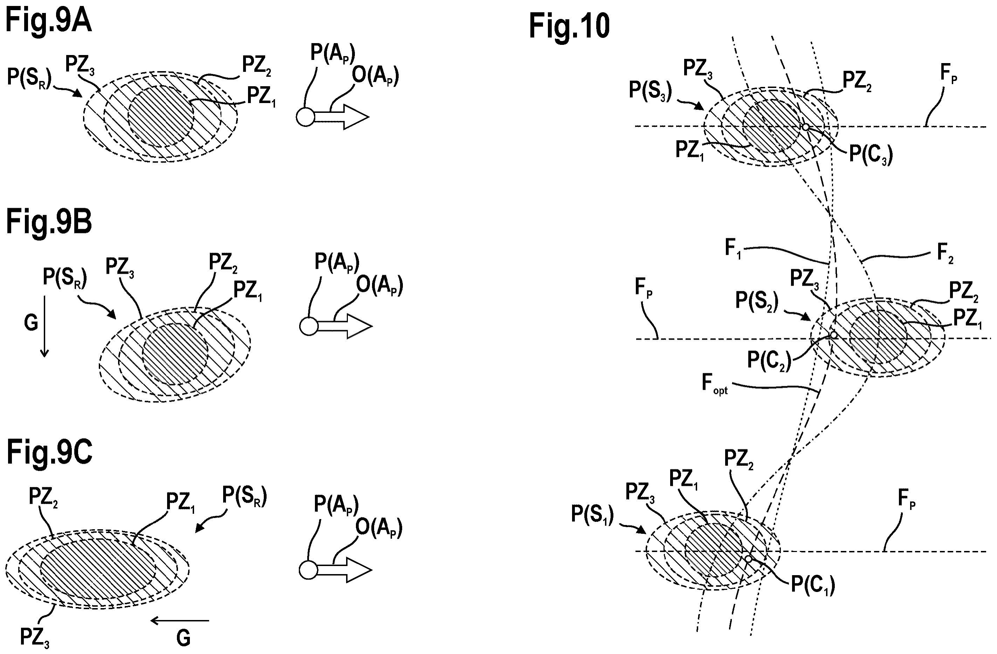

Fig.9A bis 9C zeigen beispielhaft, wie die Anordnungsverteilung auch unabhängig von bereits bekannten Real-Anordnungen angepasst werden kann, indem Parameter einbezogen werden, die den Bearbeitungsbereich 5 betreffen. Fig.9A zeigt eine Anordnungsverteilung in einem ebenen Abschnitt des Bearbeitungsbereichs 5, also einem Abschnitt ohne nennenswertes Gefälle. Diese entspricht der in Fig. 8A gezeigten Verteilung. Fig.9B zeigt eine Anordnungsverteilung in einem Abschnitt, in dem ein Gefälle G gegeben ist, das in einem 90°-Winkel zur Orientierung O der Ablageanordnung $A_P$ verläuft. Die Anordnungsverteilung verlagert sich in Richtung des Gefälles G und die Form der Positionszonen $PZ_1$-$PZ_3$ wird verzerrt. Dies spiegelt die Annahme wider, dass sich die Erntegutballen 30 bei der Ablage tendenziell in Richtung des Gefälles G bewegen. Fig.9C zeigt eine Anordnungsverteilung in einem Abschnitt, in dem das Gefälle G entgegengesetzt zur Orientierung der Ablageanordnung $A_P$ verläuft. Die Anordnungsverteilung verlagert sich in Richtung des Gefälles G von der Ablageanordnung $A_P$ fort und die Form der Positionszonen $PZ_1$-$PZ_3$ wird in die Länge gezogen.

Wenn die Soll-Anordnung $S_i$ als Anordnungsverteilung gegeben ist, kann die optimale Fahrroute $F_{opt}$ in anderer Weise geplant werden als bei einer eindeutig gegebenen Soll-Anordnung $S_i$. Die optimale Fahrroute $F_{opt}$ muss in diesem Fall nicht auf eine bestimmte Position und Orientierung eines Erntegutballens 30 abgestimmt sein. Es kann vielmehr unter den Anordnungsmöglichkeiten eine ausgewählt werden, die dann eine

Auswahlanordnung $C_i$ bildet, die der optimalen Fahrroute $F_{opt}$ zugrunde gelegt wird. Die Auswahl kann sich sowohl an der Vorteilhaftigkeit der hieraus resultierenden Fahrroute $F_{opt}$ orientieren als auch an der Anordnungswahrscheinlichkeit der Auswahlanordnung $C_i$. Qualitativ kann die für die Fahrroute gewählte Auswahlanordnung $C_i$ einen Kompromiss aus Anordnungswahrscheinlichkeit und Optimierung darstellen. Dieses Prinzip ist schematisch in Fig.10 veranschaulicht. Gezeigt sind die Soll-Anordnungen $S_1$-$S_3$ von drei Erntegutballen 30, die jeweils durch Anordnungsverteilungen mit drei Positionszonen $PZ_1$-$PZ_3$ gegeben sind. Aus Darstellungsgründen ist die Orientierung hierbei nicht berücksichtigt. Die optimale Fahrroute $F_{opt}$ verläuft durch die Positionen P von drei Auswahlanordnungen $C_1$-$C_3$. In keiner der drei Anordnungsverteilungen liegt die Auswahlanordnung $C_1$-$C_3$ in der ersten Positionszone $PZ_1$, obgleich diese der höchsten Anordnungswahrscheinlichkeit entspricht. Dafür erlaubt die optimale Fahrroute $F_{opt}$ der Sammeleinheit 20 moderate Kurvenradien und eine vergleichsweise kurze Fahrstrecke. Eine erste alternative Fahrroute $F_1$, die bei der Planung in Betracht gezogen werden könnte, ermöglicht eine nahezu gerade Fahrt und somit eine noch kürzere Fahrstrecke. Allerdings verläuft diese Fahrroute $F_1$ in allen drei Anordnungsverteilungen nur durch die dritte Positionszone $PZ_1$, mit der die geringste Anordnungswahrscheinlichkeit assoziiert ist. Daher wird diese Fahrroute $F_1$ nicht ausgewählt. Eine zweite alternative Fahrroute F2 verläuft in allen drei Anordnungsverteilungen durch die erste Positionszone $PZ_1$, die mit der höchsten Anordnungswahrscheinlichkeit assoziiert ist. Allerdings erfordert diese Fahrroute $F_2$ enge Kurvenradien, wodurch sich die Fahrstrecke und die Fahrzeit vergrößern. Daher wird auch diese Fahrroute $F_2$ nicht ausgewählt.

**Patentansprüche**

1. Verfahren zur Aufnahme von Erntegutballen (30), die in einem Bearbeitungsbereich (5) angeordnet sind, durch eine Sammeleinheit (20), mit den Schritten:

   - Bereitstellen (S110) von Anordnungsinformationen, die jeweils einer erwarteten Soll-Anordnung ($S_i$) jedes einer Mehrzahl von Erntegutballen (30) entsprechen,
   - rechnergestütztes Ermitteln (S120) einer optimalen Fahrroute ($F_{opt}$) zur Aufnahme der Mehrzahl von Erntegutballen (30) anhand der Anordnungsinformationen, entsprechend einem definierten Optimierungskriterium zur Fahrroutenoptimierung, wobei die optimale Fahrroute ($F_{opt}$) einen Soll-Anfahrweg ($W_{S1}$-$W_{S6}$) für jeden Erntegutballen (30) enthält, entlang dessen der Erntegutballen (30) anzufahren ist, und
   - Anfahren (S130) der Erntegutballen (30) durch die Sammeleinheit (20), wobei bei Annäherung an den jeweiligen Erntegutballen (30) eine Real-Anordnung ($R_i$) desselben ermittelt wird (S140) und der Erntegutballen (30) entsprechend der Real-Anordnung ($R_i$) entlang eines Real-Anfahrwegs ($W_{Ri}$) angefahren wird,

   **dadurch gekennzeichnet, dass**
   bei einer Abweichung des Real-Anfahrwegs ($W_{Ri}$) eines Erntegutballens vom Soll-Anfahrweg ($W_{S1}$-$W_{S6}$) die optimale Fahrroute ($F_{opt}$) unter Berücksichtigung des abweichenden Real-Anfahrwegs ($W_{Ri}$) wenigstens teilweise erneut rechnergestützt ermittelt wird (S210).

2. Verfahren nach Anspruch 1, **dadurch gekennzeichnet, dass** die Soll-Anordnung ($S_i$) eines Erntegutballens (30) wenigstens einer translatorischen Position (P) sowie wenigstens einer rotatorischen Orientierung (O) desselben entspricht

3. Verfahren nach einem der vorangehenden Ansprüche, **dadurch gekennzeichnet, dass** die Real-Anordnung ($R_i$) sowie bevorzugt der Real-Anfahrweg ($W_{Ri}$) automatisch ermittelt werden.

4. Verfahren nach einem der vorangehenden Ansprüche, **dadurch gekennzeichnet, dass** bei einer Abweichung der Real-Anordnung ($R_i$) eines Erntegutballens (30) von dessen Soll-Anordnung ($S_i$) die optimale Fahrroute ($F_{opt}$) unter Berücksichtigung der abweichenden Real-Anordnung ($R_i$) wenigstens teilweise erneut rechnergestützt ermittelt wird (S210).

5. Verfahren nach einem der vorangehenden Ansprüche, **dadurch gekennzeichnet, dass** die Sammeleinheit (20) die Erntegutballen (30) autonom anfährt und aufnimmt.

6. Verfahren nach einem der vorangehenden Ansprüche, **dadurch gekennzeichnet, dass** Anordnungsinformationen bereitgestellt werden (S110), bei denen die Soll-Anordnung ($S_i$) wenigstens eines Erntegutballens (30) einer Anordnungsverteilung mit einer Mehrzahl von Anordnungsmöglichkeiten entspricht, wobei jeder Anordnungsmöglichkeit eine Anordnungswahrscheinlichkeit zugeordnet ist.

7. Verfahren nach einem der vorangehenden Ansprüche, **dadurch gekennzeichnet, dass** beim Ermitteln (S120) der optimalen Fahrroute ($F_{opt}$) für wenigstens einen Erntegutballen (30) eine Auswahlanordnung ($C_i$) aus der Mehrzahl von Anordnungsmöglichkeiten ausgewählt wird, wobei die Auswahlanordnung ($C_i$) sowohl in Abhängigkeit von ihrer Anordnungswahrscheinlichkeit als auch vom Optimierungskriterium ausgewählt wird.

8. Verfahren nach einem der vorangehenden Ansprüche, **dadurch gekennzeichnet, dass** die Anordnungsinformationen wenigstens teilweise auf Betriebsdaten ($D_B$) einer Ballenpresseinheit (10) basierend ermittelt werden, die die Erntegutballen (30) in dem Bearbeitungsbereich (5) abgelegt hat, und/oder auf Bereichsdaten ($D_A$), die eine Beschaffenheit des Bearbeitungsbereichs (5) beschreiben.

9. Verfahren nach einem der vorangehenden Ansprüche, **dadurch gekennzeichnet, dass** die Betriebsdaten ($D_B$) wenigstens eine Pressen-Fahrroute ($F_P$) der Ballenpresseinheit (10) beschreiben.

10. Verfahren nach einem der vorangehenden Ansprüche, **dadurch gekennzeichnet, dass** die Betriebsdaten (Ds) Positionen (P) und/oder Orientierungen (O) von Erntegutballen (30) beschreiben.

11. Verfahren nach einem der vorangehenden Ansprüche, **dadurch gekennzeichnet, dass** zur Ermittlung der Anordnungsinformationen Positionen (P) von Erntegutballen (30) anhand der Pressen-Fahrroute ($F_P$) sowie eines Ablageintervalls ($I_A$) abgeschätzt werden, welches einer Fahrstrecke der Ballenpresseinheit (10) zwischen zwei Ballenablagen entspricht.

12. Verfahren nach einem der vorangehenden Ansprüche, **dadurch gekennzeichnet, dass** das Ablageintervall ($I_A$) anhand von Parametern ermittelt wird, die die Ballenpresseinheit (10), ein von der Ballenpresseinheit (10) verarbeitetes Erntegut und/oder eine Witterung betreffen.

13. Verfahren nach einem der vorangehenden Ansprüche, **dadurch gekennzeichnet, dass** zur Ermittlung der Anordnungsinformationen Orientierungen (O) von Erntegutballen (30) anhand der Pressen-Fahrroute ($F_P$) abgeschätzt werden.

14. Verfahren nach einem der vorangehenden Ansprüche, **dadurch gekennzeichnet, dass** zur Ermittlung der Soll-Anordnung ($S_i$) einer Mehrzahl von Erntegutballen (30) eine Ablageanordnung ($A_P$) zugrunde gelegt wird, die einer Position (P) und/oder Orientierung (O) der Ballenpresseinheit (10) oder des jeweiligen Erntegutballens (30) beim Ablegen des Erntegutballens (30) entspricht, und diese kombiniert wird mit einer relativ zur Ablageanordnung ($A_P$) gegebenen Relativanordnung ($A_R$) des Erntegutballens (30).

15. Verfahren nach einem der vorangehenden Ansprüche, **dadurch gekennzeichnet, dass** die Soll-Anordnung ($S_i$) wenigstens eines noch anzufahrenden Erntegutballens (30) basierend auf der Real-Anordnung ($R_i$) wenigstens eines bereits angefahrenen Erntegutballens (30) aktualisiert wird (S200), wobei bevorzugt die Relativanordnung ($A_P$) aktualisiert wird.

16. Computersystem (50) zur Planung der Aufnahme von Erntegutballen (30), die in einem Bearbeitungsbereich (5) angeordnet sind, durch eine Sammeleinheit (20), wobei das Computersystem (50) eingerichtet ist:

    - Anordnungsinformationen, die jeweils einer erwarteten Soll-Anordnung ($S_i$) jedes einer Mehrzahl von Erntegutballen (30) entsprechen, zu erfassen,
    - rechnergestützt eine optimale Fahrroute ($F_{opt}$) zur Aufnahme der Mehrzahl von Erntegutballen (30) zu ermitteln (S110) anhand der Anordnungsinformationen, entsprechend einem definierten Optimierungskriterium zur Fahrroutenoptimierung, wobei die optimale Fahrroute ($F_{opt}$) einen Soll-Anfahrweg ($W_{Si}$) für jeden Erntegutballen (30) enthält, entlang dessen der Erntegutballen (30) anzufahren ist, und
    - einen Real-Anfahrweg ($W_{Ri}$) zu erfassen, wenn ein Anfahren (S130) der Erntegutballen (30) durch die Sammeleinheit (20) erfolgt, wobei bei Annäherung an den jeweiligen Erntegutballen (30) eine Real-Anordnung ($R_i$) desselben ermittelt wird (S140) und der Erntegutballen (30) entsprechend der Real-Anordnung ($R_i$) entlang des Real-Anfahrwegs ($W_{Ri}$) angefahren wird,

    **dadurch gekennzeichnet, dass**
    das Computersystem (50) eingerichtet ist, bei einer Abweichung des Real-Anfahrwegs ($W_{Ri}$) eines Erntegutballens (30) vom Soll-Anfahrweg ($W_{Si}$) die optimale Fahrroute ($F_{opt}$) unter Berücksichtigung des abweichenden Real-Anfahrwegs ($W_{Ri}$) wenigstens teilweise erneut rechnergestützt zu ermitteln (S210).

EP 4 728 841 A1

**Fig.1**

Fig.2

$D_A, D_B, W_{Ri}, R_i \rightarrow S_i, F_{opt}$

50

5

$S_4$  30,$R_i$  $W_{S5}$  $F_P$

$W_{S4}$  30,$R_5$  $S_5$

$F_{opt}$  $W_{S6}$

30,$R_3$  $S_3$  30,$R_6$  $S_6$  $W_{Ri}, R_i$  $F_{opt}$

$W_{S3}$  $S_2$  30,$R_2$

$W_{S2}$

$S_1$  30,$R_1$

$W_{S1}$

20

$I_A$

Fig.3B

Fig.3A

Fig.4A

$S_R$

$P(A_P)$
$O(A_P)$

Fig.4B

$P(R_1)$    $S_R$

$P(A_P)$
$O(A_P)$

$P(R_2)$    $P(R_4)$    $P(R_3)$

Fig.4C

$P(R_1)$    $S_R$

$P(A_P)$
$O(A_P)$

$P(R_2)$    $P(R_4)$    $P(R_3)$

Fig.5A

$S_i$    $30,R_i$    $A_P$        $S_i$    $30,R_i$    $A_P$

$30,R_i$    $S_i$

$A_P$

$F_P$

$S_i$    $30,R_i$

$A_P$

5

Fig.5B

$S_i$    $30,R_i$    $A_P$        $S_i$    $30,R_i$    $A_P$

$30,R_i$    $S_i$

$A_P$

$F_P$

$S_i$    $30,R_i$

$A_P$

5

EP 4 728 841 A1

# Fig.6

```
        START
          │
          ▼
       ┌──────┐
       │ S100 │
       └──────┘
          │
          ▼
       ┌──────┐
       │ S110 │
       └──────┘
          │
          ▼
       ┌──────┐
       │ S120 │
       └──────┘
          │
          ▼
       ┌──────┐
       │ S130 │
       └──────┘
          │
          ▼
       ┌──────┐
       │ S140 │
       └──────┘
          │
          ▼
       ┌──────┐
       │ S150 │
       └──────┘
          │
          ▼
       ┌──────┐
       │ S160 │
       └──────┘
          │
          ▼
       ┌──────┐
       │ S170 │
       └──────┘
          │
          ▼
┌──────┐ N  ◇ S180 ◇
│ S190 │◄───    │ J
└──────┘        │
   │            ▼
   │         ┌──────┐
   │         │ S200 │
   │         └──────┘
   │            │
   │            ▼
   │         ┌──────┐
   └─────────│ S210 │
             └──────┘
```

EP 4 728 841 A1

Fig.10

Fig.9A

Fig.9B

Fig.9C

Europäisches
Patentamt

European
Patent Office

Office européen
des brevets

## EUROPÄISCHER RECHERCHENBERICHT

Nummer der Anmeldung

EP 25 20 3740

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/019752 A1 (FREI BRENT RONALD [US] ET AL) 16. Januar 2020 (2020-01-16) | 1-7,16 | INV. A01B69/04 |
| Y | * Absätze [0001], [0099], [0209] - [0217]; Abbildung 9 * | 1-6 | |
| | ----- | | |
| X | EP 4 094 568 A1 (CNH IND BELGIUM NV [BE]) 30. November 2022 (2022-11-30) | 1-16 | |
| Y | * Absätze [0001], [0017], [0029], [0042], [0058]; Abbildung 4 * | 1-15 | |
| | ----- | | |
| Y | US 2018/252531 A1 (JOHNSON GERALD R [US]) 6. September 2018 (2018-09-06) * Absätze [0002], [0005], [0043], [0051], [0052], [0055], [0058], [0059], [0063], [0091] * | 1-16 | |
| | ----- | | |
| Y | WO 2024/119141 A1 (VERMEER MFG CO [US]) 6. Juni 2024 (2024-06-06) * Absätze [0114], [0115] * | 1,3,5,16 | |
| | ----- | | |

RECHERCHIERTE
SACHGEBIETE (IPC)

A01B
A01D
G06Q

Der vorliegende Recherchenbericht wurde für alle Patentansprüche erstellt

| Recherchenort | Abschlußdatum der Recherche | Prüfer |
|---|---|---|
| München | 2. Februar 2026 | Karstens, Thede |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 3740

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2026

| Im Recherchenbericht angeführtes Patentdokument | Datum der Veröffentlichung | Mitglied(er) der Patentfamilie | Datum der Veröffentlichung |
|---|---|---|---|
| US 2020019752 A1 | 16-01-2020 | AU 2019301825 A1 | 28-01-2021 |
| | | AU 2022287536 A1 | 02-02-2023 |
| | | AU 2022287537 A1 | 02-02-2023 |
| | | AU 2022287538 A1 | 02-02-2023 |
| | | AU 2022287539 A1 | 02-02-2023 |
| | | CA 3106014 A1 | 16-01-2020 |
| | | CA 3158548 A1 | 16-01-2020 |
| | | CA 3158552 A1 | 16-01-2020 |
| | | EP 3821313 A1 | 19-05-2021 |
| | | US 2020015401 A1 | 16-01-2020 |
| | | US 2020019752 A1 | 16-01-2020 |
| | | US 2020019778 A1 | 16-01-2020 |
| | | US 2020019825 A1 | 16-01-2020 |
| | | US 2020020093 A1 | 16-01-2020 |
| | | US 2021272264 A1 | 02-09-2021 |
| | | US 2021358104 A1 | 18-11-2021 |
| | | US 2022028048 A1 | 27-01-2022 |
| | | US 2022164941 A1 | 26-05-2022 |
| | | WO 2020014680 A1 | 16-01-2020 |
| ------------ | ------------ | ------------ | ------------ |
| EP 4094568 A1 | 30-11-2022 | EP 4094568 A1 | 30-11-2022 |
| | | US 2022225571 A1 | 21-07-2022 |
| ------------ | ------------ | ------------ | ------------ |
| US 2018252531 A1 | 06-09-2018 | KEINE | |
| ------------ | ------------ | ------------ | ------------ |
| WO 2024119141 A1 | 06-06-2024 | KEINE | |
| ------------ | ------------ | ------------ | ------------ |

EPO FORM P0461

Für nähere Einzelheiten zu diesem Anhang : siehe Amtsblatt des Europäischen Patentamts, Nr.12/82